# EUROPEAN PATENT APPLICATION

(11) **EP 4 421 607 A1**
(43) Date of publication of application: **28.08.2024**
(21) Application number: 22903370.9
(22) Date of filing: 05.12.2022
(51) Int. Cl.: G06F 3/04886

(54) **DISPLAY METHOD AND ELECTRONIC DEVICE**

(30) Priority: 08.12.2021 CN 202111493706; 26.01.2022 CN 202210093485
(71) Applicant: Huawei Technologies Co., Ltd., Shenzhen, Guangdong 518129 (CN)
(72) Inventor: TANG, Ming, Shenzhen, Guangdong 518129 (CN); ZHANG, Teng, Shenzhen, Guangdong 518129 (CN); KANG, Yu, Shenzhen, Guangdong 518129 (CN)
(74) Representative: Pfenning, Meinig & Partner mbB
(86) International application number: PCT/CN2022/136529
(87) International publication number: WO 2023/103948

(57) **Abstract**

Embodiments of this application provide a display method and an electronic device. The method includes: A first device displays a first interface, where the first interface includes first information, and the first information is related to a first service; the first device receives a first user operation, and in response to the first user operation, recognizes the first interface to determine intent information, where the intent information indicates to execute a first instruction, and the first instruction is used to implement the first service; and the first device sends the intent information to the second device, where the intent information is used by the second device to execute the first instruction and generate second information, and the second information is used by the second device to display a second interface; or the first device sends second information to the second device, where the second information is generated by the first device by executing the first instruction, and the second information is used by the second device to display the second interface. In embodiments of this application, an interaction manner in a multi-device interconnection scenario can be simplified, user operations are reduced, and efficiency is improved.

## Description

This application claims priority to Chinese Patent Application No. 202111493706.2, filed with the China National Intellectual Property Administration on December 8, 2021 and entitled "DISPLAY METHOD AND ELECTRONIC DEVICE", and claims priority to Chinese Patent Application No. 202210093485.8, filed with the China National Intellectual Property Administration on January 26, 2022 and entitled "DISPLAY METHOD AND ELECTRONIC DEVICE", which are incorporated herein by reference in their entireties.

### TECHNICAL FIELD

This application relates to the field of computer technologies, and in particular, to a display method and an electronic device.

### BACKGROUND

In a scenario in which a plurality of devices are connected to and communicate with each other (for example, a distributed scenario), a user can independently use any one of the devices, and can use the plurality of devices simultaneously (services of the plurality of devices may be related, for example, a video on a smartphone is projected onto a smart television for playing). However, electronic devices in this scenario lack a simple and efficient interaction, and user operations are complex. For example, in a scenario in which a smartphone is connected to an on-board computer, if a user receives a communication message including location information by using the smartphone, the user needs to start a map application on the on-board computer, and set a destination to a place indicated by the location information, to implement navigation for the location information. Consequently, operations are complex. If the user is driving, driving safety is affected, and user experience is poor.

### SUMMARY

Embodiments of this application disclose a display method and an electronic device, to simplify an interaction manner in a multi-device interconnection scenario, reduce user operations, and improve efficiency.

According to a first aspect, an embodiment of this application provides a display method, applied to a first device. The first device is connected to a second device. The method includes: displaying a first interface, where the first interface includes first information, and the first information is related to a first service; receiving a first user operation; in response to the first user operation, recognizing the first interface to determine intent information, where the intent information indicates to execute a first instruction, where the first instruction is used to implement the first service; and sending the intent information to the second device, where the intent information is used by the second device to execute the first instruction and generate second information, and the second information is used by the second device to display a second interface.

In some embodiments, the first instruction is obtained by parsing the intent information. In some other embodiments, the first instruction is included in the intent information.

In some embodiments, the second information is used by the second device to display the second interface and play a first audio. In some other embodiments, the second information is used by the second device to play a first audio, and the second device does not display the second interface.

In the foregoing method, when receiving the first user operation, the first device may recognize a user intent based on the currently displayed first interface, and the second device executes the first instruction. The first instruction is used to implement the first service corresponding to the recognized intent information. In this way, a user does not need to manually operate the first device or the second device to trigger implementation of the first service. This reduces user operations, and an interaction manner in a multi-device interconnection scenario is more efficient and convenient.

In a possible implementation, the first interface further includes third information, and the third information is related to a second service. The recognizing the first interface to determine intent information includes: recognizing the first information to determine fourth information, and recognizing the third information to determine fifth information, where the fourth information indicates to execute the first instruction, the fifth information indicates to execute a second instruction, and the second instruction is used to implement the second service; and determining, from the fourth information and the fifth information according to a first preset rule, that the intent information is the fourth information, where the first preset rule includes at least one of the following: A device type of the second device is a preset device type, a service supported by the second device includes the first service, and a priority of the first service is higher than a priority of the second service.

In some embodiments, the first information and the third information are instant messaging messages, and the first preset rule includes that receiving time of the first information is later than receiving time of the third information.

In the foregoing method, the first device may further determine, according to the first preset rule, the intent information that better meets a user requirement in a current scenario, so that interaction accuracy is further improved, and user experience is better.

In a possible implementation, the first information is location information, the first service is a navigation service, the second service is different from the first service, the first preset rule includes that the device type of the second device is the preset device type, and the preset device type is vehicle-mounted device.

In a possible implementation, the first information is video information, the first service is a video playing service, the second service is different from the first service, the first preset rule includes that the device type of the second device is the preset device type, and the preset device type includes a smart television and a smart screen.

In a possible implementation, the first information is information indicating a first location, the first service is the navigation service, and the second information is display information generated by performing a navigation operation on the first location.

In some embodiments, the first device is a smartphone, and the second device is the vehicle-mounted device.

In the foregoing method, when the first device displays the first interface including the location information, if the first user operation is received, the navigation service for the location information may be implemented by using the second device. In this way, the user does not need to manually input the location information on the second device and manually trigger the navigation operation, so that an interaction manner in a multi-device interconnection scenario is more efficient and convenient.

In a possible implementation, the first information is information indicating a first video, the first service is a video playing service, and the second information is display information generated by playing the first video.

In some embodiments, the first device is a smartphone, and the second device is a smart television.

In the foregoing method, when the first device displays the first interface including the video information, if the first user operation is received, the service for playing the video information may be implemented by using the second device. In this way, the user does not need to manually search for the video information on the second device and manually trigger the video playing service, so that an interaction manner in a multi-device interconnection scenario is more efficient and convenient.

In a possible implementation, the first information is information indicating a first recipe, the first service is a cooking service, and the second information is display information generated for implementing the cooking service corresponding to the first recipe.

In some embodiments, the first device is a smartphone, and the second device is a smart food processor.

In the foregoing method, when the first device displays the first interface including recipe information, if the first user operation is received, the cooking service corresponding to the recipe information may be implemented by using the second device. In this way, the user does not need to manually search for the recipe information on the second device and manually trigger the cooking service, so that an interaction manner in a multi-device interconnection scenario is more efficient and convenient.

In a possible implementation, the first information is information indicating a first question and an answer to the first question, the first service is a test paper generation service, and the second interface includes the first question, but does not include the answer to the first question.

In some embodiments, the first device is a smartphone, and the second device is a tablet computer or a learning machine.

In the foregoing method, when the first device displays the first interface including the question and the answer, if the first user operation is received, the second device may display the question, but does not display the answer. In this way, a child can practice the question on the second device, and a parent does not need to manually search for the question on the second device or manually trigger the test paper generation service, so that an interaction manner is convenient and accurate, and can well meet requirements of the parent and the child.

In a possible implementation, the first user operation is a shake operation, a swing operation, a knuckle tap operation, a knuckle sliding operation, a multi-finger tap operation, a multi-finger sliding operation, or the like.

In the foregoing method, the first user operation is simple and convenient, and the user does not need to perform complex operations to trigger implementation of the first service. In this way, an interaction threshold is low, and use of the user is more convenient.

According to a second aspect, this application provides another display method, applied to a first device. The first device is connected to a second device. The method includes: displaying a first interface, where the first interface includes first information, and the first information is related to a first service; receiving a first user operation; in response to the first user operation, recognizing the first interface to determine intent information; executing a first instruction based on the intent information, to generate second information, where the first instruction is used to implement the first service; and sending the second information to the second device, where the second information is used by the second device to display a second interface.

In some embodiments, the first instruction is obtained by parsing the intent information. In some other embodiments, the first instruction is included in the intent information.

In some embodiments, the second information is used by the second device to display the second interface and play a first audio. In some other embodiments, the second information is used by the second device to play a first audio, and the second device does not display the second interface.

In the foregoing method, when receiving the first user operation, the first device may recognize a user intent based on the currently displayed first interface, and execute the first instruction indicated by the recognized intent information, and the second device outputs multimedia data generated by executing the first instruction. It may be understood that the first service corresponding to the first instruction is implemented by the second device. In this way, the user does not need to manually operate the first device or the second device to trigger implementation of the first service. This reduces user operations, and an interaction manner in a multi-device interconnection scenario is more efficient and convenient.

In a possible implementation, the first interface further includes third information, and the third information is related to a second service. The recognizing the first interface to determine intent information includes: recognizing the first information to determine fourth information, and recognizing the third information to determine fifth information, where the fourth information indicates to execute the first instruction, the fifth information indicates to execute a second instruction, and the second instruction is used to implement the second service; and determining, from the fourth information and the fifth information according to a first preset rule, that the intent information is the fourth information, where the first preset rule includes that a device type of the second device is a preset device type, and/or a priority of the first service is higher than a priority of the second service.

In some embodiments, the first information and the third information are instant messaging messages, and the first preset rule includes that receiving time of the first information is later than receiving time of the third information.

In the foregoing method, the first device may further determine, according to the first preset rule, the intent information that better meets a user requirement in a current scenario, so that interaction accuracy is further improved, and user experience is better.

In a possible implementation, the first information is location information, the first service is a navigation service, the second service is different from the first service, the first preset rule includes that the device type of the second device is the preset device type, and the preset device type is vehicle-mounted device.

In a possible implementation, the first information is information indicating a first location, the first service is the navigation service, and the second information is display information generated by performing a navigation operation on the first location.

In a possible implementation, the first information is information indicating a first video, the first service is a video playing service, and the second information is display information generated by playing the first video.

In a possible implementation, the first information is information indicating a first recipe, the first service is a cooking service, and the second information is display information generated for implementing the cooking service corresponding to the first recipe.

In a possible implementation, the first information is information indicating a first question and an answer to the first question, the first service is a test paper generation service, and the second interface includes the first question, but does not include the answer to the first question.

In a possible implementation, the first user operation is a shake operation, a swing operation, a knuckle tap operation, a knuckle sliding operation, a multi-finger tap operation, a multi-finger sliding operation, or the like.

According to a third aspect, this application provides another display method, applied to a second device. The second device is connected to a first device. The method includes: receiving intent information sent by the first device, where the intent information is determined by recognizing a displayed first interface when the first device receives a first user operation, the first interface includes first information, and the first information is related to a first service; executing a first instruction based on the intent information, to generate second information, where the first instruction is used to implement the first service; and displaying a second interface based on the second information.

In some embodiments, the first instruction is obtained by parsing the intent information. In some other embodiments, the first instruction is included in the intent information.

In some embodiments, the second information is used by the second device to display the second interface and play a first audio. In some other embodiments, the second information is used by the second device to play a first audio, and the second device does not display the second interface.

In the foregoing method, when receiving the first user operation, the first device may recognize a user intent based on the currently displayed first interface, and send the recognized intent information to the second device. The second device may execute the first instruction indicated by the intent information to implement the first service. In this way, a user does not need to manually operate the first device or the second device to trigger implementation of the first service. This reduces user operations, and an interaction manner in a multi-device interconnection scenario is more efficient and convenient.

In a possible implementation, the first information is information indicating a first location, the first service is the navigation service, and the second information is display information generated by performing a navigation operation on the first location.

In a possible implementation, the first information is information indicating a first video, the first service is a video playing service, and the second information is display information generated by playing the first video.

In a possible implementation, the first information is information indicating a first recipe, the first service is a cooking service, and the second information is display information generated for implementing the cooking service corresponding to the first recipe.

In a possible implementation, the first information is information indicating a first question and an answer to the first question, the first service is a test paper generation service, and the second interface includes the first question, but does not include the answer to the first question.

In a possible implementation, the first user operation is a shake operation, a swing operation, a knuckle tap operation, a knuckle sliding operation, a multi-finger tap operation, a multi-finger sliding operation, or the like.

According to a fourth aspect, this application provides another display method, applied to a second device. The second device is connected to a first device. The method includes: receiving first information sent by the first device, where the first information is information generated by executing a first instruction, the first instruction is used to implement a first service, the first instruction is an instruction that is executed as indicated by intent information, the intent information is determined by recognizing a displayed first interface when the first device receives a first user operation, the first interface includes second information, and the second information is related to the first service; and displaying a second interface based on the first information.

In some embodiments, the first instruction is obtained by parsing the intent information. In some other embodiments, the first instruction is included in the intent information.

In some embodiments, the second information is used by the second device to display the second interface and play a first audio. In some other embodiments, the second information is used by the second device to play a first audio, and the second device does not display the second interface.

In the foregoing method, when receiving the first user operation, the first device may recognize a user intent based on the currently displayed first interface, and execute the first instruction indicated by the recognized intent information, and the second device outputs multimedia data generated by executing the first instruction. It may be understood that the first service corresponding to the first instruction is implemented by the second device. In this way, the user does not need to manually operate the first device or the second device to trigger implementation of the first service. This reduces user operations, and an interaction manner in a multi-device interconnection scenario is more efficient and convenient.

In a possible implementation, the second information is information indicating a first location, the first service is the navigation service, and the first information is display information generated by performing a navigation operation on the first location.

In a possible implementation, the second information is information indicating a first video, the first service is a video playing service, and the first information is display information generated by playing the first video.

In a possible implementation, the second information is information indicating a first recipe, the first service is a cooking service, and the first information is display information generated for implementing the cooking service corresponding to the first recipe.

In a possible implementation, the second information is information indicating a first question and an answer to the first question, the first service is a test paper generation service, and the second interface includes the first question, but does not include the answer to the first question.

In a possible implementation, the first user operation is a shake operation, a swing operation, a knuckle tap operation, a knuckle sliding operation, a multi-finger tap operation, a multi-finger sliding operation, or the like.

According to a fifth aspect, an embodiment of this application provides an electronic device, including one or more processors and one or more memories. The one or more memories are coupled to the one or more processors. The one or more memories are configured to store computer program code, and the computer program code includes computer instructions. When the one or more processors execute the computer instructions, a communication apparatus is enabled to perform the display method according to any possible implementation of any one of the foregoing aspects.

According to a sixth aspect, an embodiment of this application provides a computer storage medium. The computer storage medium stores a computer program. When the computer program is executed by a processor, the display method according to any possible implementation of any one of the foregoing aspects is performed.

According to a seventh aspect, an embodiment of this application provides a computer program product. When the computer program product runs on an electronic device, the electronic device is enabled to perform the display method according to any possible implementation of any one of the foregoing aspects.

According to an eighth aspect, an embodiment of this application provides an electronic device. The electronic device includes the method or apparatus for performing any embodiment of this application. For example, the electronic device is a chip.

It should be understood that description of technical features, technical solutions, beneficial effects, or similar words in this application does not imply that all features and advantages can be implemented in any single embodiment. On the contrary, it may be understood that description of features or beneficial effects indicates that a specific technical feature, technical solution, or beneficial effect is included in at least one embodiment. Therefore, description of technical features, technical solutions, or beneficial effects in this specification does not necessarily indicate a same embodiment. Further, the technical features, technical solutions, and beneficial effects described in embodiments may be combined in any appropriate manner. A person skilled in the art may understand that an embodiment may be implemented without one or more specific technical features, technical solutions, or beneficial effects in a specific embodiment. In other embodiments, additional technical features and beneficial effects may be further recognized in a specific embodiment that does not reflect all embodiments.

### BRIEF DESCRIPTION OF DRAWINGS

The following describes the accompanying drawings used in embodiments of this application.
FIG. 1A is a schematic diagram of an architecture of a communication system 10 according to an embodiment of this application;
FIG. 1B is a schematic diagram of an architecture of another communication system 10 according to an embodiment of this application;
FIG. 1C is a schematic diagram of an architecture of still another communication system 10 according to an embodiment of this application;
FIG. 2A is a schematic diagram of a hardware structure of an electronic device 100 according to an embodiment of this application;
FIG. 2B is a schematic diagram of a hardware structure of an electronic device 200 according to an embodiment of this application;
FIG. 2C is a schematic diagram of a hardware structure of a network device 300 according to an embodiment of this application;
FIG. 2D is a schematic diagram of a software architecture of an electronic device 100 according to an embodiment of this application.
FIG. 3A-1 to FIG. 3C are schematic diagrams of some user interface embodiments according to embodiments of this application;
FIG. 4A-1 to FIG. 4B-2 are schematic diagrams of still some user interface embodiments according to embodiments of this application;
FIG. 4C-1 and FIG. 4C-2 are a schematic diagram of another user interface embodiment according to an embodiment of this application;

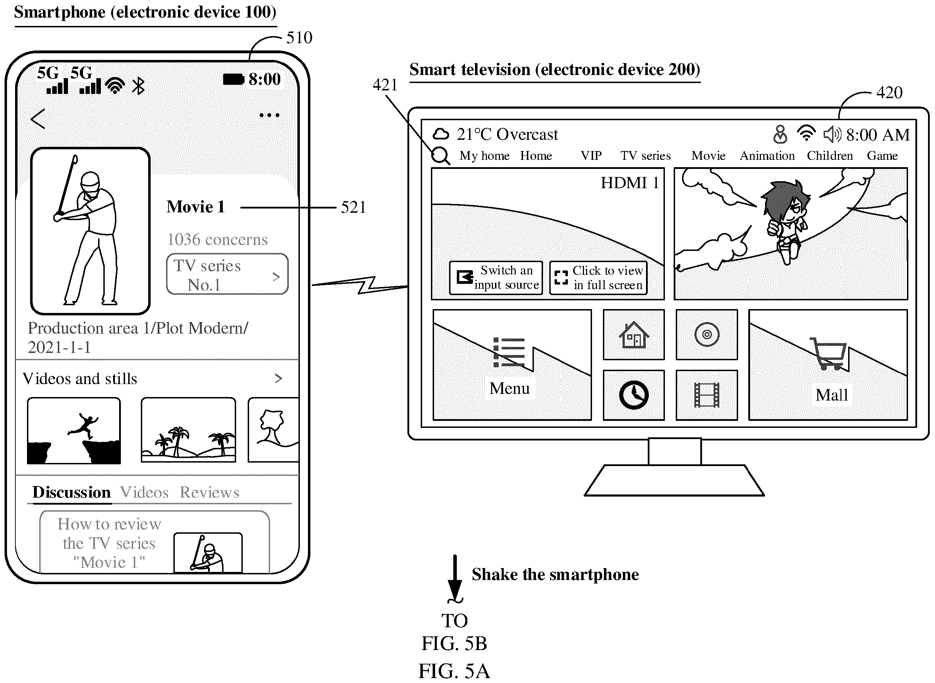

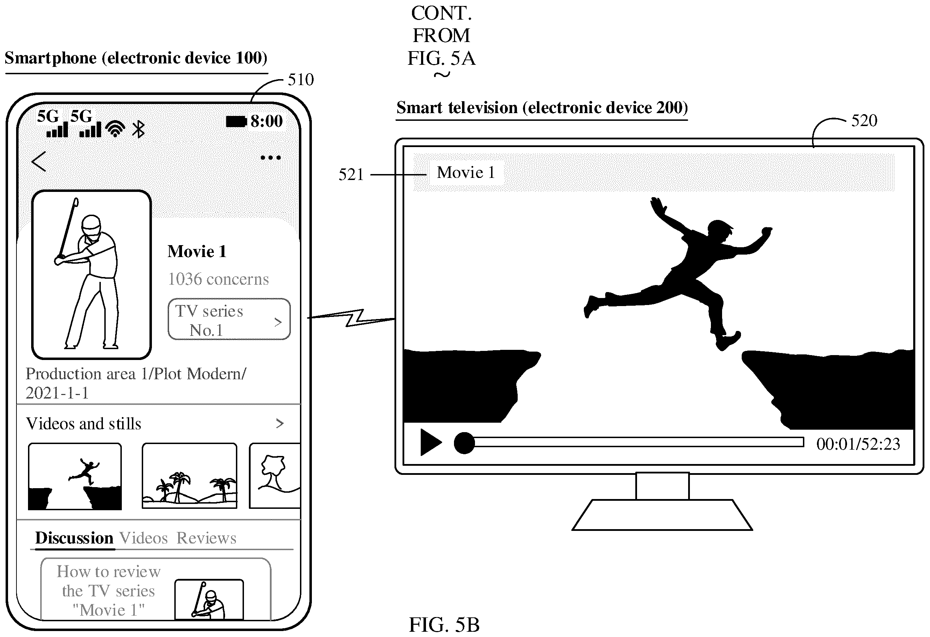

FIG. 5A and FIG. 5B are a schematic diagram of another user interface embodiment according to an embodiment of this application;

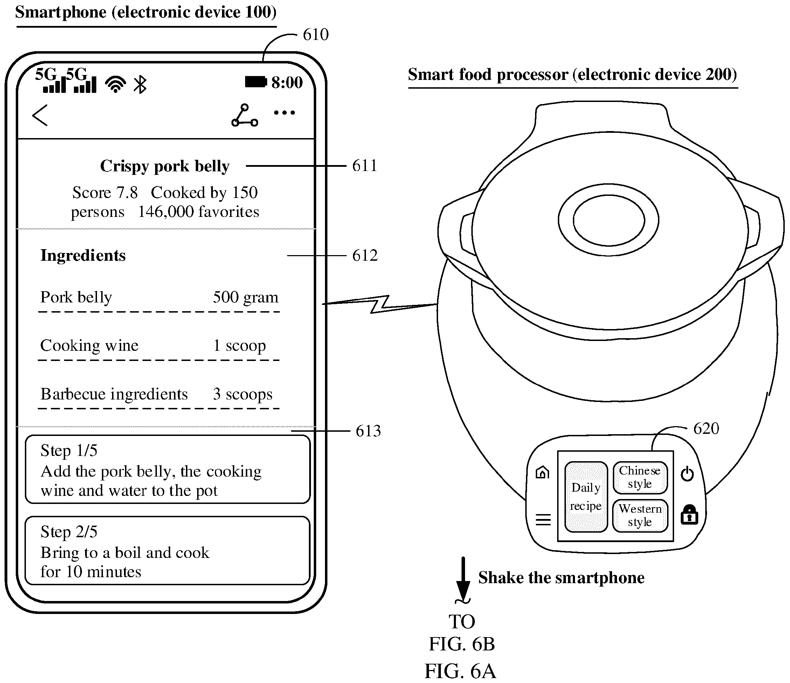

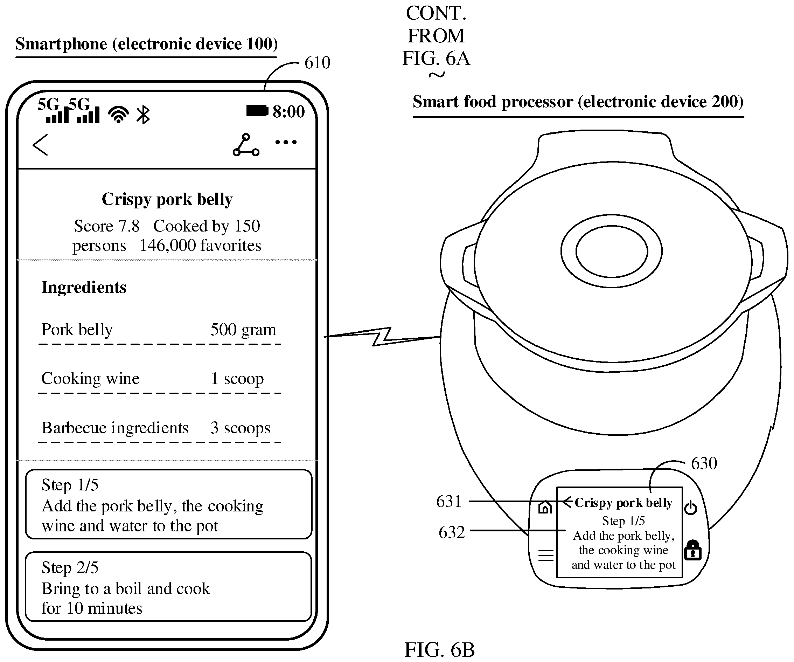

FIG. 6A and FIG. 6B are a schematic diagram of another user interface embodiment according to an embodiment of this application;
FIG. 7A-1 and FIG. 7A-2 are a schematic diagram of another user interface embodiment according to an embodiment of this application;
FIG. 7B-1 and FIG. 7B-2 are a schematic diagram of another user interface embodiment according to an embodiment of this application;

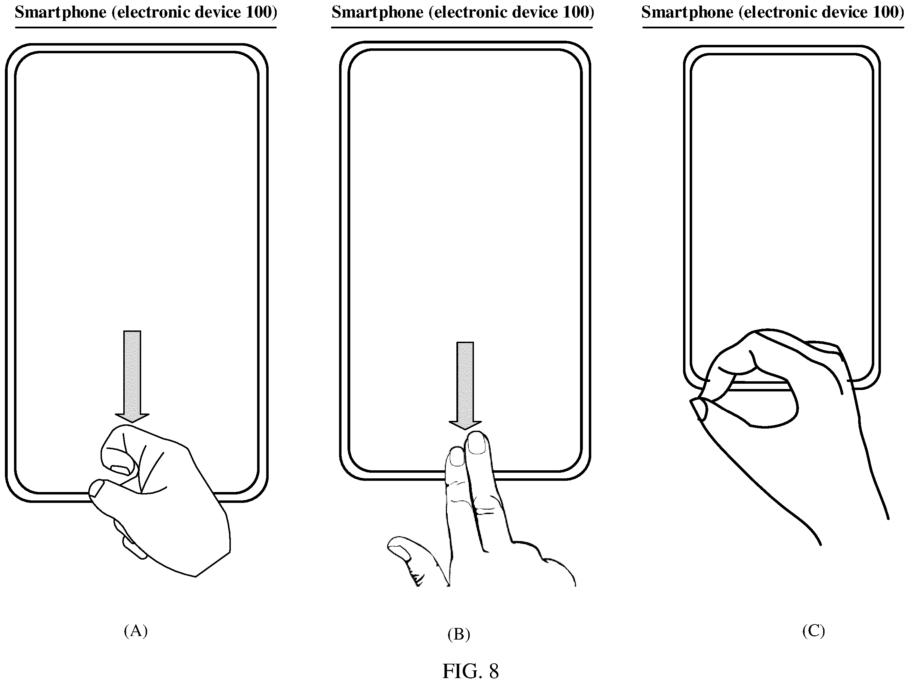

FIG. 8 is a schematic diagram of a user operation according to an embodiment of this application;

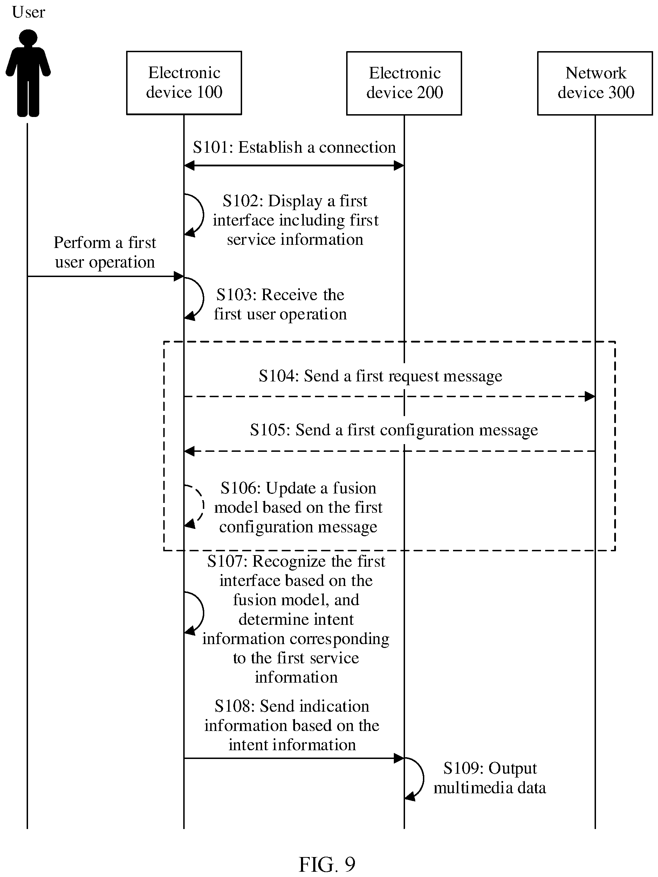

FIG. 9 is a schematic flowchart of a display method according to an embodiment of this application;

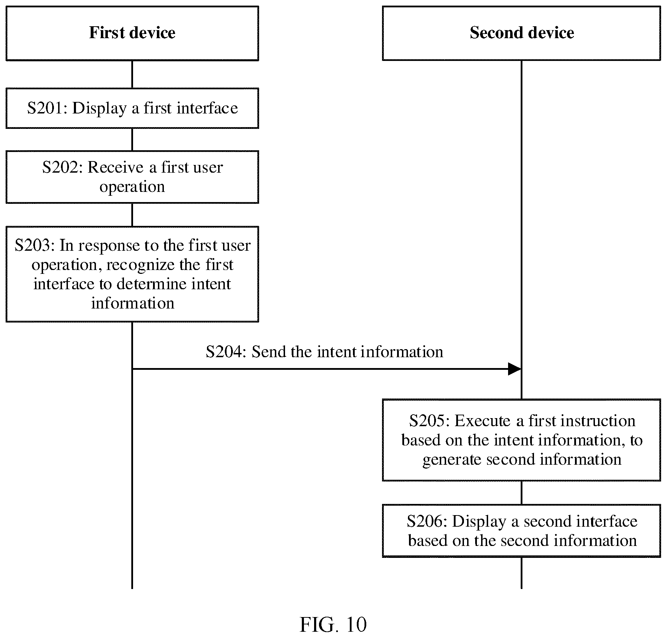

FIG. 10 is a schematic flowchart of another display method according to an embodiment of this application; and

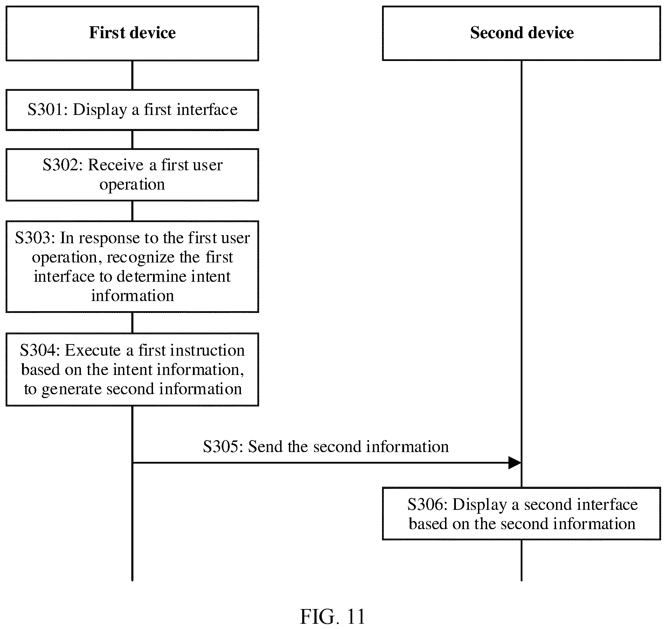

FIG. 11 is a schematic flowchart of still another display method according to an embodiment of this application.

### DESCRIPTION OF EMBODIMENTS

The technical solutions according to embodiments of this application are clearly and completely described in the following with reference to the accompanying drawings. In description of embodiments of this application, unless otherwise specified, "/" indicates "or". For example, A/B may indicate A or B. The term "and/or" in this specification merely describes an association relationship between associated objects, and indicates that three relationships may exist. For example, A and/or B may indicate the following three cases: Only A exists, both A and B exist, and only B exists. In addition, in the description of embodiments of this application, "a plurality of" means two or more.

The terms "first" and "second" mentioned below are merely intended for a purpose of description, and shall not be understood as an indication or implication of relative importance or implicit indication of a quantity of indicated technical features. Therefore, a feature limited to "first" and "second" may explicitly or implicitly include one or more features. In the description of embodiments of this application, unless otherwise specified, "a plurality of" means two or more.

Embodiments of this application may be applied to a scenario in which a plurality of devices are connected to and communicate with each other, for example, a distributed scenario. In this scenario, a user may simultaneously use a plurality of devices. In this case, services of the plurality of devices may be associated, for example, a video on a smartphone is projected onto a smart television for playing. However, electronic devices in this scenario lack a simple and efficient interaction, and user operations are complex. Specific examples are as follows.

Example 1: In a scenario in which a smartphone is connected to an on-board computer, if a user receives a communication message including location information by using the smartphone, the user needs to start a map application on the on-board computer, and set a destination to a place indicated by the location information, to implement navigation for the location information. Consequently, operations are complex. If the user is driving, driving safety is affected, and user experience is poor.

Example 2: In a scenario in which a smartphone is connected to a smart television, if a user views information (such as an overview and a movie review) of a specific movie on the smartphone, and wants to watch the movie on the smart television, the user needs to search for the movie on the smart television for playing, or the user needs to first start a video application on the smartphone and a playing interface of the movie, operate a projection control, and select a device (namely, the smart television) onto which the movie is to be projected, to project the movie onto the smart television for watching. Consequently, operations are complex, and interaction efficiency is low.

Example 3: In a scenario in which a smartphone is connected to a smart food processor, if a user views information about a specific recipe on the smartphone, and wants to use the smart food processor to make a corresponding dish, the user needs to search for the recipe on the smart food processor to perform cooking. Consequently, operations are complex, and interaction efficiency is low.

Example 4: In a scenario in which a smartphone is connected to a tablet computer, a child may use the tablet computer or a learning machine for learning, and a parent may use the smartphone to search for related exercises. If the parent finds, on the smartphone, an exercise that the parent wants the child to answer, the parent needs to search for the exercise on the tablet computer or the learning machine again. Consequently, operations are complex, and interaction efficiency is low.

An embodiment of this application provides a display method. A first device may recognize a currently displayed first interface in response to a user operation, and determine intent information, and the first device may implement, through a second device, a service indicated by the intent information. In this way, a user does not need to manually trigger the second device to implement the service indicated by the intent information, and an efficient and convenient interaction manner applied to a multi-device interconnection scenario is provided. This reduces user operations, and improves user experience.

For example, in response to a shake operation (the user operation), a smartphone (the first device) may recognize a chat interface (the first interface) including a location card (a message that displays a geographical location in a form of a card), and determine intent information. The intent information indicates a navigation service for performing navigation on a place indicated by the location card, and the intent information may be obtained based on the location card. In this case, the smartphone may indicate, based on the intent information, an on-board computer to execute the navigation service, and optionally perform an operation: setting, to a destination in a map application, the place indicated by the location card and performing navigation.

The following describes a communication system 10 in embodiments of this application.

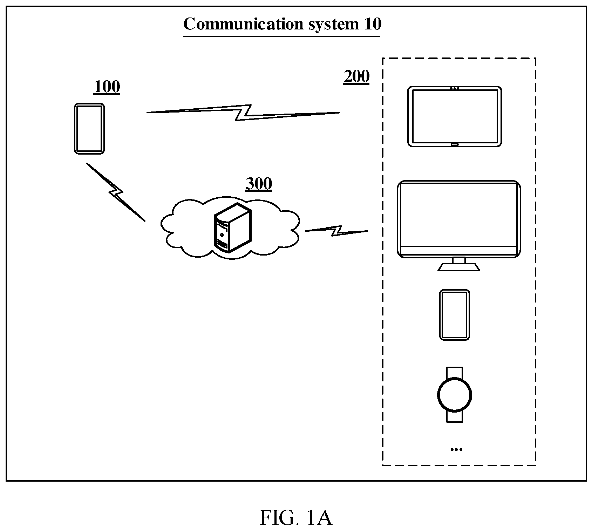

FIG. 1A shows an example of a schematic diagram of an architecture of a communication system 10 according to an embodiment of this application.

As shown in FIG. 1A, the communication system 10 may include an electronic device 100, an electronic device 200, and a network device 300.

In some embodiments, the electronic device 100 may be connected to at least one electronic device 200 in a wired manner and/or a wireless manner. The wired manner includes, for example, a high-definition multimedia interface (high-definition multimedia interface, HDMI), a universal serial bus (universal serial bus, USB), a coaxial cable, or an optical fiber. The wireless manner includes, for example, Bluetooth, wireless fidelity (wireless fidelity, Wi-Fi), a near field communication (near field communication, NFC) technology, or an ultra-wideband (ultra-wideband, UWB). The electronic device 100 may communicate with the electronic device 200 through a connection line (for example, Bluetooth or Wi-Fi). In this case, an information transmission rate between the electronic device 100 and the electronic device 200 is high, and a large amount of information can be transmitted.

In some other embodiments, the electronic device 100 may be connected to the network device 300 in a wired manner and/or a wireless manner, and the network device 300 may be connected to at least one electronic device 200 in a wired manner and/or a wireless manner. The electronic device 100 may communicate with the electronic device 200 through the network device 300. For example, the electronic device 100 is a smartphone, the electronic device 200 is a vehicle, and the network device 300 is a cloud server that provides a HUAWEI HiCar function. In this case, a connection and projection between the electronic device 100 and the electronic device 200 may be implemented by using the HUAWEI HiCar function.

In some other embodiments, although the electronic device 100 is not connected to the electronic device 200, the electronic device 100 may establish a connection to the electronic device 200 and then communicate with the electronic device 200. It may be understood that the electronic device 200 is an electronic device that is not connected to the electronic device 100 but can communicate with the electronic device 100. Optionally, the electronic device 100 may store connection information (for example, a Bluetooth address and password, and a Wi-Fi name and password) of at least one electronic device 200, and is connected to the at least one electronic device 200 by using the connection information (for example, send information including the password to the electronic device 200 corresponding to the Bluetooth address, to request to establish a connection). Optionally, the connection information of the electronic device 200 may be obtained when the electronic device 100 is previously connected to the electronic device 200. Optionally, the connection information of the electronic device 200 may be obtained by the electronic device 100 through the network device 300. For example, after logging in to a specific account, the electronic device 100 may obtain the connection information of the electronic device 200 that previously logs in to the account. A manner in which the electronic device 100 obtains the connection information of the electronic device 200 is not limited in this application.

The electronic devices and the network device that are shown in FIG. 1A are merely examples, and a specific device form is not limited.

In this application, the electronic device 100 may be a mobile terminal like a mobile phone, a tablet computer, a handheld computer, or a personal digital assistant (Personal Digital Assistant, PDA), a smart home device like a smart television, a smart camera, or a smart food processor, a wearable device like a smart band, a smart watch, or smart glasses, or another device like a desktop, a laptop, a notebook computer, an ultra-mobile personal computer (Ultra-mobile Personal Computer, UMPC), a netbook, a smart screen, or a learning machine. Description of the electronic device 200 is similar, and details are not described again. Specific types of the electronic device 100 and the electronic device 200 are not specifically limited in embodiments of this application.

In this application, the network device 300 may include at least one server. In some embodiments, any server may be a hardware server. In some embodiments, any server may be a cloud server.

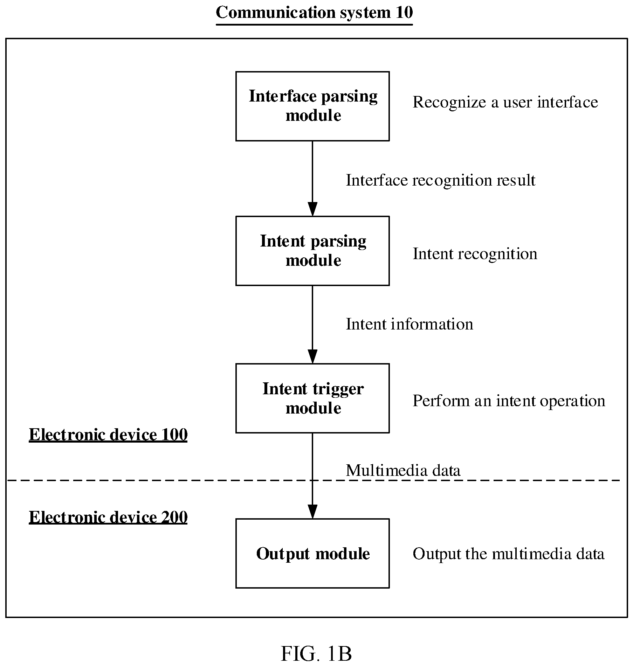

FIG. 1B shows an example of a schematic diagram of an architecture of another communication system 10 according to an embodiment of this application.

As shown in FIG. 1B, the electronic device 100 in the communication system 10 may include an interface parsing module, an intent parsing module, and an intent trigger module, and the electronic device 200 in the communication system 10 may include an output module.

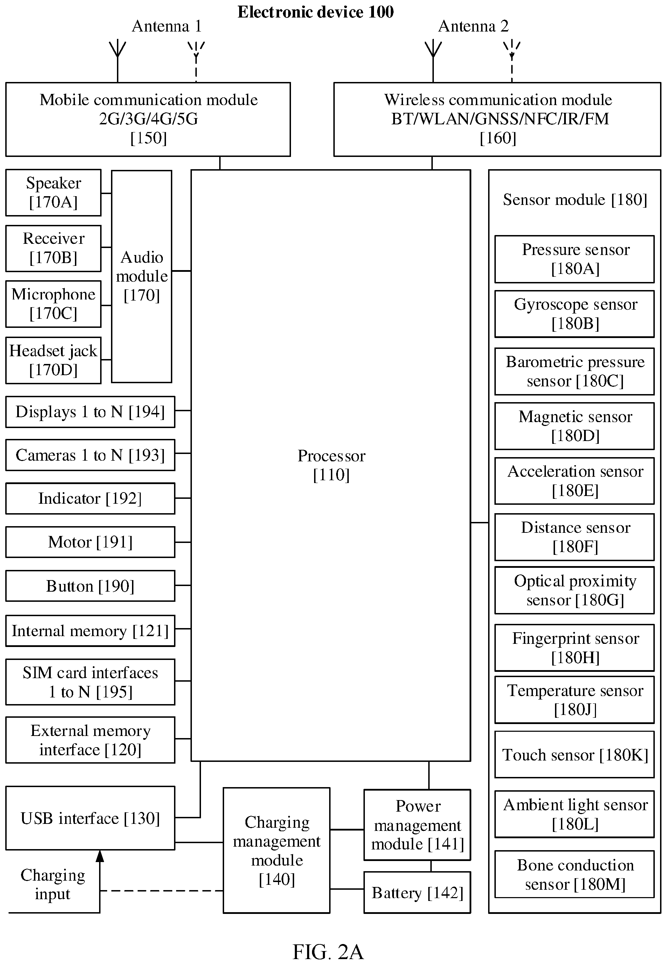

When detecting a user operation, for example, detecting the user operation through a sensor module 180 shown in FIG. 2A, the electronic device 100 may report, to the interface parsing module, an event (which may be referred to as a trigger event) corresponding to the user operation.

When receiving the trigger event, the interface parsing module of the electronic device 100 may recognize a user interface displayed by the electronic device 100, and obtain an interface recognition result. In some embodiments, the interface parsing module may recognize and parse a layer structure and a text of the current interface through keyword extraction, natural language understanding (natural language understanding, NLU), or the like. The interface recognition result includes, for example, text information, and structure information indicating a structure in the user interface. The interface recognition result is, for example, data in an XML format, data in a JSON format, or data in another existing format. The interface recognition result is not limited thereto, and may alternatively be data in a customized format. The interface parsing module may send the interface recognition result to the intent parsing module.

In some embodiments, the interface parsing module may recognize some pages in the displayed user interface, and obtain an interface recognition result. For example, the user interface displayed by the electronic device 100 is a split-screen interface. It is assumed that the split-screen interface includes a page of a first application and a page of a second application, and an application operated by a user last time is the first application. The interface parsing module may recognize the page of the first application, and obtain a corresponding interface recognition result. This is not limited thereto. The interface parsing module may recognize a page of an application selected by a user, or the like. A manner of determining information that needs to be recognized in the user interface is not limited in this application.

The intent parsing module of the electronic device 100 may perform intent recognition based on the interface recognition result, and obtain intent information. The intent information may be specific data obtained by performing interface recognition and intent recognition in the user interface displayed by the electronic device 100. The intent information is, for example, data in an XML format, data in a JSON format, or data in another existing format. The intent information is not limited thereto, and may alternatively be data in a customized format. In some embodiments, from a perspective of the user, the intent information indicates an objective that needs to be achieved. Optionally, the intent information indicates that an implemented service corresponds to some service information in the user interface displayed by the electronic device 100. In some embodiments, the interface recognition result includes first structure information and first text information. In this case, the intent parsing module may recognize the first structure information, determine an interface structure indicated by the first structure information, and then obtain intent information based on the first text information and the determined interface structure. For example, the intent parsing module obtains an interface structure of a location card and an interface structure of a text box through recognition, determines, based on the interface structure of the location card, that a type of text information "Beijing Railway Station" included in the location card is address information, determines, based on the interface structure of the text box, that a type of text information "Meet here" included in the text box is chat information, and obtains, based on the address information "Beijing Railway Station" and the chat information "Meet here", intent information indicating to navigate to a geographical location "Beijing Railway Station". Then, the intent parsing module may send the intent information to the intent trigger module.

In some embodiments, the intent parsing module may further determine whether the intent information is valid. The intent parsing module sends the intent information to the intent trigger module only when determining that the intent information is valid. For example, when the intent information indicates to navigate to the geographical location "Beijing Railway Station", the intent parsing module determines whether the address information "Beijing Railway Station" in the intent information corresponds to a real and valid geographical location on a map. The intent parsing module sends the intent information to the intent trigger module only when determining that the address information "Beijing Railway Station" in the intent information corresponds to the real and valid geographical location on the map. For another example, when the intent information indicates to play a movie named "Movie 1", the intent parsing module determines whether video information "Movie 1" in the intent information corresponds to a real video that can be played. The intent parsing module sends the intent information to the intent trigger module only when determining that the video information "Movie 1" in the intent information corresponds to the real video that can be played.

The intent trigger module of the electronic device 100 may perform an intent operation based on the intent information. In some embodiments, the intent trigger module may parse the intent information to obtain a specific instruction, and invoke the instruction to perform the intent operation. In some embodiments, from a perspective of the user, the intent information indicates an objective that needs to be achieved, and the intent operation may correspond to a user operation that needs to be performed by the user to achieve the objective. In other words, the user can control the electronic device 100 to perform the intent operation only after performing a plurality of user operations. In some embodiments, the intent trigger module may invoke a corresponding service module to perform the intent operation. For example, when the intent information indicates to navigate to the geographical location "Beijing Railway Station", the intent trigger module may invoke a navigation module of a map application to perform the intent operation: setting a destination to the geographical location "Beijing Railway Station" and performing navigation. After performing the intent operation, the intent trigger module may send corresponding multimedia data (for example, an audio stream and a video stream that correspond to a navigation service) to the output module of the electronic device 200.

After receiving the multimedia data sent by the intent trigger module of the electronic device 100, the output module of the electronic device 200 may output the multimedia data, for example, play the audio stream corresponding to the navigation service, and display the video stream corresponding to the navigation service.

In some embodiments, the interface parsing module of the electronic device 100 may include an interface parsing model. The interface parsing model is used to recognize a displayed user interface and obtain an interface recognition result. Optionally, the interface parsing module may use, as an input of the interface parsing model, content in the user interface displayed by the electronic device 100, to obtain an output interface recognition result. For example, the interface parsing module uses, as an input, interface content including address information in a form of a text, to obtain an output text structure and/or the address information, or uses, as an input, interface content including address information in a form of a card (for example, the location card described above), to obtain an output card structure and/or the address information.

In some embodiments, the intent parsing module of the electronic device 100 may include an intent parsing model that is used to perform intent recognition through the intent parsing module. Optionally, the intent parsing module may use the interface recognition result as an input of the intent parsing model, to obtain output intent information.

The foregoing example is not limited. The interface parsing module and the intent parsing module of the electronic device 100 may be disposed in a same fusion module. The fusion module may include a fusion model, and the fusion model is used to determine intent information based on a displayed user interface. Optionally, the fusion module may use displayed interface content as an input of the fusion model, to obtain output intent information. For example, interface content including address information is used as the input of the fusion model, to obtain the output intent information. The intent information indicates to perform navigation on a place indicated by the address information.

In some embodiments, the electronic device 100 may train the interface parsing model and/or the intent parsing model, or the electronic device 100 may train the fusion model. In some other embodiments, the network device 300 in the communication system 10 may train the interface parsing module and/or the intent parsing model, and send a trained interface parsing module and/or a trained intent parsing model to the electronic device 100, or the network device 300 may train the fusion model, and send a trained fusion model to the electronic device 100. A manner in which the network device 300 sends the interface parsing module and/or the intent parsing model or the fusion model to the electronic device 100 is not limited in this application. For example, after receiving a user operation, the electronic device 100 may send a request message to the network device 300 to request to obtain the foregoing model. For another example, the network device 300 may send the foregoing model to the electronic device 100 at an interval of preset duration, for example, send the model once a week. For another example, when a version of the model is updated, the network device 300 may send a model with the updated version to the electronic device 100.

In some embodiments, the electronic device 100 or the network device 300 may train the interface parsing model by using content in a user interface as an input, and using, as inputs, a structure and a text included in the user interface. Input and output examples are similar to the foregoing example in which the displayed user interface is recognized by using the interface parsing model. Details are not described again.

In some embodiments, the electronic device 100 or the network device 300 may train the intent parsing model by using the interface recognition result as an input, and using a corresponding intent operation and/or corresponding intent information as an output.

In some embodiments, the electronic device 100 or the network device 300 may train the fusion model by using content in a user interface as an input, and using a corresponding intent operation and/or corresponding intent information as an output. For example, the fusion model is trained by using, as an input, content in a user interface that includes address information, and using the intent operation (that is, setting, to a destination, a place indicated by the address information and performing navigation) as an output. Alternatively, the fusion model is trained by using, as an input, content in a user interface that does not include address information, and using a corresponding user operation (for example, an operation performed by the user when the electronic device 100 displays the user interface) as an output. This is not limited thereto. Alternatively, the fusion model may be trained by using, as an input, content in a user interface that does not include address information, and using, as an output, information indicating that there is no navigation intent.

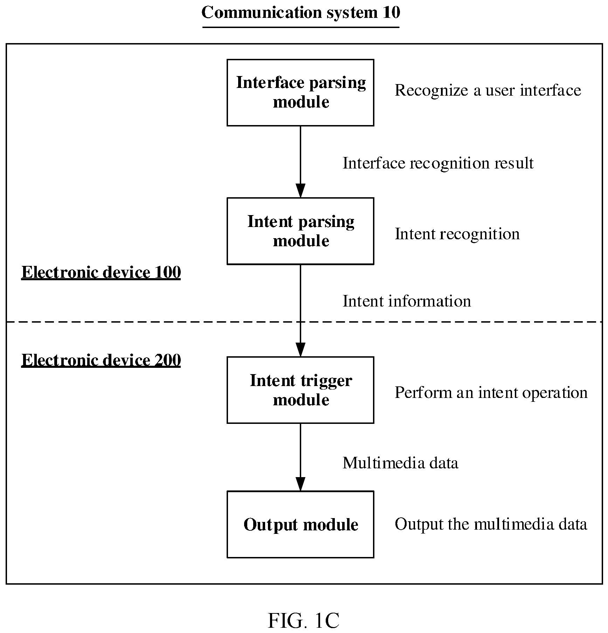

This is not limited to the example in FIG. 1B. In some other embodiments, at least one of the interface parsing module, the intent parsing module, and the intent trigger module may not be a module included in the electronic device 100, but may be a module included in the electronic device 200. For example, the intent trigger module is a module included in the electronic device 200. For a specific example, refer to FIG. 1C. As shown in FIG. 1C, after receiving intent information sent by the intent parsing module of the electronic device 100, the intent trigger module of the electronic device 200 may perform an intent operation based on the intent information, and send, to the output module, multimedia data corresponding to the intent operation, and the output module outputs the multimedia data. Other description is similar to those in FIG. 1B, and details are not described again.

The following describes the electronic device 100, the electronic device 200, and the network device 300 in embodiments of this application.

FIG. 2A shows an example of a schematic diagram of a hardware structure of the electronic device 100.

The electronic device 100 is used as an example below to describe embodiments in detail. It should be understood that the electronic device 100 shown in FIG. 2A is merely an example, and the electronic device 100 may have more or fewer components than those shown in FIG. 2A, or a combination of two or more components, or an arrangement of different components. Various components shown in the FIG. 2A may be implemented by using hardware including one or more signal processing and/or application-specific integrated circuits, software, or a combination of hardware and software.

As shown in FIG. 2A, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the electronic device 100. In some other embodiments of this application, the electronic device 100 may include more or fewer components than those shown in the figure, or a combination of some components, or splits from some components, or an arrangement of different components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, to improve system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronous serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI, to implement a photographing function of the electronic device 100. The processor 110 communicates with the display 194 through the DSI interface, to implement a display function of the electronic device 100.

It may be understood that an interface connection relationship between the modules that is shown in this embodiment of the present invention is merely an example for description, and does not constitute a limitation on a structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from the charger.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like.

A wireless communication function of the electronic device 100 may be implemented through the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a solution, applied to the electronic device 100, to wireless communication including 2G/3G/4G/5G, or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules in the mobile communication module 150 may be disposed in the processor 110. In some embodiments, at least some functional modules in the mobile communication module 150 may be disposed in a same device as at least some modules in the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal through an audio device (which is not limited to the speaker 170A, the receiver 170B, or the like), or displays an image or a video through the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution, applied to the electronic device 100, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite-based augmentation system (satellite-based augmentation system, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the electronic device 100 may include one or N displays 194, where N is a positive integer greater than 1.

The electronic device 100 may implement a photographing function through the ISP, the camera 193, the video codec, the GPU, the display 194, the application processor, and the like.

The ISP is configured to process data fed back by the camera 193. For example, during photographing, a shutter is pressed, and light is transferred to a photosensitive element of the camera through a lens. An optical signal is converted into an electrical signal, and the photosensitive element of the camera transfers the electrical signal to the ISP for processing, to convert the electrical signal into a visible image. The ISP may further perform algorithm optimization on noise, brightness, and the like of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format like RGB or YUV. In some embodiments, the electronic device 100 may include one or N cameras 193, where N is a positive integer greater than 1.

The digital signal processor is configured to process a digital signal, and may process another digital signal in addition to the digital image signal.

The video codec is configured to compress or decompress a digital video.

The NPU is a neural-network (neural-network, NN) computing processor, quickly processes input information by referring to a structure of a biological neural network, for example, by referring to a transfer mode between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

The audio module 170 is configured to convert digital audio information into an analog audio signal for an output, and is also configured to convert an analog audio input into a digital audio signal. The audio module 170 may be further configured to encode and decode an audio signal.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an electrical audio signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device 100.

The headset jack 170D is configured to connect to a wired headset.

The pressure sensor 180A is configured to sense a pressure signal, and can convert the pressure signal into an electrical signal. In some embodiments, the pressure sensor 180A may be disposed on the display 194. When a touch operation is performed on the display 194, the electronic device 100 detects intensity of the touch operation through the pressure sensor 180A. The electronic device 100 may also calculate a touch location based on a detection signal of the pressure sensor 180A.

The gyroscope sensor 180B may be configured to determine a moving posture of the electronic device 100. In some embodiments, an angular velocity of the electronic device 100 around three axes (namely, axes x, y, and z) may be determined through the gyroscope sensor 180B. The gyroscope sensor 180B may be further used in an image stabilization scenario, a navigation scenario, and a somatic game scenario.

The barometric pressure sensor 180C is configured to measure barometric pressure. In some embodiments, the electronic device 100 calculates an altitude through the barometric pressure measured by the barometric pressure sensor 180C, to assist in positioning and navigation.

The magnetic sensor 180D includes a Hall sensor. The electronic device 100 may detect opening and closing of a flip cover by using the magnetic sensor 180D.

The acceleration sensor 180E may detect accelerations in various directions (usually on three axes) of the electronic device 100. When the electronic device 100 is still, a magnitude and a direction of gravity may be detected. The acceleration sensor 180E may be further configured to identify a posture of the electronic device, and is used in an application like switching between a landscape mode and a portrait mode or a pedometer.

The distance sensor 180F is configured to measure a distance. The electronic device 100 may measure the distance in an infrared manner or a laser manner.

The ambient light sensor 180L is configured to sense ambient light brightness.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature.

The touch sensor 180K is also referred to as a "touch device". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided through the display 194. In some other embodiments, the touch sensor 180K may alternatively be disposed on a surface of the electronic device 100 at a location different from that of the display 194.

The bone conduction sensor 180M may obtain a vibration signal.

The button 190 includes a power button, a volume button, and the like. The button 190 may be a mechanical button, or may be a touch button. The electronic device 100 may receive a button input, and generate a button signal input related to a user setting and function control of the electronic device 100.

The motor 191 may generate a vibration prompt.

The indicator 192 may be an indicator light, and may be configured to indicate a charging status and a power change, or may be configured to indicate a message, a missed call, a notification, and the like.

The SIM card interface 195 is configured to connect to a SIM card.

In some embodiments, the electronic device 100 may detect a user operation through the sensor module 180. In response to the user operation, the processor 110 may perform intent recognition based on a user interface displayed by the display 194. The electronic device 100 sends, based on recognized intent information, indication information to the electronic device 200 through the mobile communication module 150 and/or the wireless communication module. After receiving the indication information, the electronic device 200 may output multimedia data corresponding to the intent information, for example, displaying a navigation interface corresponding to a navigation intent.

For example, the electronic device 100 detects, through the pressure sensor 180A and/or the touch sensor 180K, a touch operation performed by a user on the electronic device 100, for example, tapping the display 194 with a knuckle, or sliding on the display 194 with a knuckle, two fingers, or three fingers. For another example, the electronic device 100 detects a shake operation and a hand-swing operation of a user through the gyroscope sensor 180B and/or the acceleration sensor 180E. For another example, the electronic device 100 detects a gesture operation of a user through the camera 193. A module for detecting a user operation is not limited in this application.

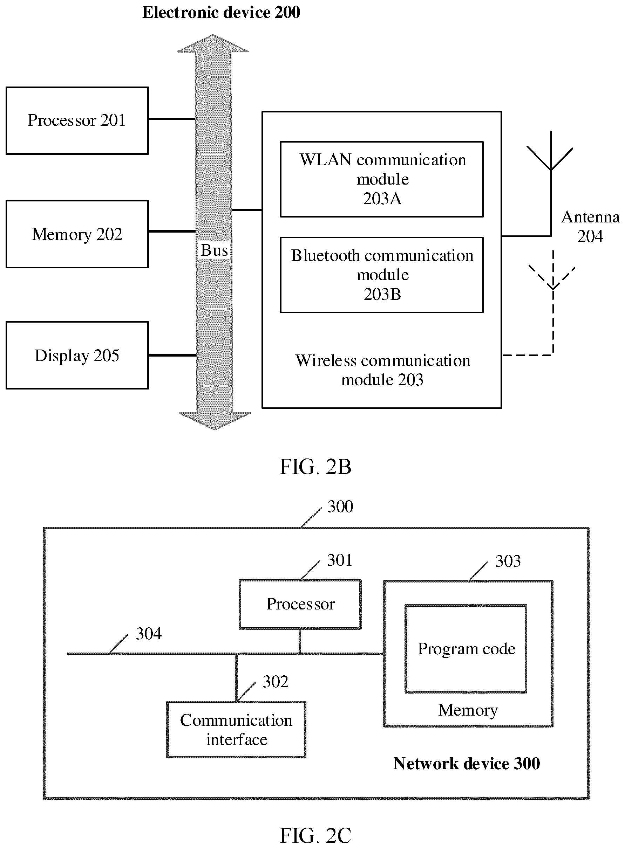

FIG. 2B shows an example of a schematic diagram of a hardware structure of the electronic device 200.

The electronic device 200 is used as an example below to describe embodiments in detail. It should be understood that the electronic device 200 shown in FIG. 2B is merely an example, and the electronic device 200 may have more or fewer components than those shown in FIG. 2B, or a combination of two or more components, or an arrangement of different components.

As shown in FIG. 2B, the electronic device 200 may include a processor 201, a memory 202, a wireless communication module 203, an antenna 204, and a display 205. Optionally, the electronic device 200 may further include a wired communication module (not shown).

Specifically, the processor 201 may be configured to read and perform computer-readable instructions. During specific implementation, the processor 201 may mainly include a controller, an arithmetic logic unit, and a register. The controller is mainly responsible for instruction decoding, and sends a control signal for an operation corresponding to an instruction. The arithmetic logic unit is mainly responsible for storing a quantity of register operations, intermediate operation results, and the like that are temporarily stored during instruction execution. During specific implementation, a hardware architecture of the processor 201 may be an application-specific integrated circuit (ASIC) architecture, an MIPS architecture, an ARM architecture, an NP architecture, or the like. In some embodiments, the processor 201 may be further configured to generate a signal to be sent by the wireless communication module 203 to the outside, for example, a Bluetooth broadcast signal or a beacon signal.

The memory 202 is coupled to the processor 201, and is configured to store various software programs and/or a plurality of groups of instructions. During specific implementation, the memory 202 may include a high-speed random access memory, and may also include a non-volatile memory like one or more disk storage devices, a flash storage device, or another non-volatile solid-state storage device. The memory 202 may store an operating system, for example, an embedded operating system like uCOS, VxWorks, or RTLinux. The memory 202 may further store a communication program. The communication program may be used to communicate with the electronic device 100 or another device.

The wireless communication module 203 may include one or more of a WLAN communication module 203A and a Bluetooth communication module 203B. Optionally, the Bluetooth communication module 203B may be integrated with another communication module (for example, the WLAN communication module 203A).

In some embodiments, one or more of the WLAN communication module 203A and the Bluetooth communication module 203B may monitor a signal transmitted by another device, for example, a measurement signal or a scanning signal; send a response signal, for example, a measurement response or a scanning response, so that the another device may discover the electronic device 200; and establish a wireless communication connection to the another device by using one or more of Bluetooth and WLAN or another near field communication technology, to perform data transmission.

In some other embodiments, the WLAN communication module 203A may transmit a signal, for example, broadcast a detection signal or a beacon signal, so that a router may discover the electronic device 200; and establish a wireless communication connection to the router by using the WLAN, to be connected to the electronic device 100 and the network device 300.

The wired communication module (not shown) may be configured to: establish a connection to a device like a router through a network cable, and be connected to the electronic device 100 and the network device 300 through the router.

The antenna 204 may be configured to transmit and receive an electromagnetic wave signal. Antennas of different communication modules may be multiplexed, or may be independent of each other, to improve antenna utilization. For example, an antenna of the Bluetooth communication module 203B may be multiplexed as an antenna of the WLAN communication module 203A.

The display 205 may be configured to display an image, a video, and the like. The display 205 includes a display panel. The display panel may be a liquid crystal display, an organic light-emitting diode, an active-matrix organic light emitting diode, a flexible light-emitting diode, a quantum dot light-emitting diode, or the like. In some embodiments, the electronic device 200 may include one or N displays 205, where N is a positive integer greater than 1.

In some embodiments, the electronic device 200 may further include a sensor. For a specific example, refer to the sensor module 180 shown in FIG. 2A. Details are not described again.

In some embodiments, the electronic device 200 may receive, by using the wireless communication module 203 and/or the wired communication module (not shown), indication information sent by the electronic device 100. The processor 201 may display, by using the display 205 and based on the indication information, a user interface corresponding to the intent information, for example, display a navigation interface corresponding to a navigation intent.

FIG. 2C shows an example of a schematic diagram of a hardware structure of the network device 300.

As shown in FIG. 2C, the network device 300 may include one or more processors 301, a communication interface 302, and a memory 303. The processor 301, the communication interface 302, and the memory 303 may be connected through a bus or in another manner. In embodiments of this application, an example in which the processor 301, the communication interface 302, and the memory 303 are connected through a bus 304 is described.

Specifically, the processor 301 may include one or more general-purpose processors, for example, CPUs. The processor 301 may be configured to run program code related to a device control method.

The communication interface 302 may be a wired interface (for example, an Ethernet interface) or a wireless interface (for example, a cellular network interface or a wireless local area network interface), and is configured to communicate with another node. In this embodiment of this application, the communication interface 302 may be specifically configured to communicate with the electronic device 100 and the electronic device 200.

The memory 303 may include a volatile memory (volatile memory), for example, a RAM. Alternatively, the memory may include a non-volatile memory (non-volatile memory), for example, a ROM, a flash memory (flash memory), an HDD, or a solid-state drive SSD. Alternatively, the memory 303 may include a combination of the foregoing types of memories. The memory 303 may be configured to store a group of program code, so that the processor 201A invokes the program code stored in the memory 203A to implement the method implemented by a server in embodiments of this application. In this embodiment of this application, the memory 303 may alternatively be a storage array or the like.

In some embodiments, the network device 300 may include a plurality of servers, such as a web server, a background server, and a download server. For hardware structures of the plurality of servers, refer to the hardware structure of the network device 300 shown in FIG. 2C.

It should be noted that the network device 300 shown in FIG. 2C is merely an implementation of embodiments of this application. In actual application, the network device 300 may alternatively include more or fewer components. This is not limited herein.

A software system of the electronic device 100 may use a layered architecture, an event-driven architecture, a microkernel architecture, a micro service architecture, or a cloud architecture. For example, the software system of the layered architecture may be an Android (Android) system, a Huawei Mobile Services (Huawei mobile services, HMS) system, or another software system. In this embodiment of this application, the Android system of the layered architecture is used as an example to describe a software structure of the electronic device 100.

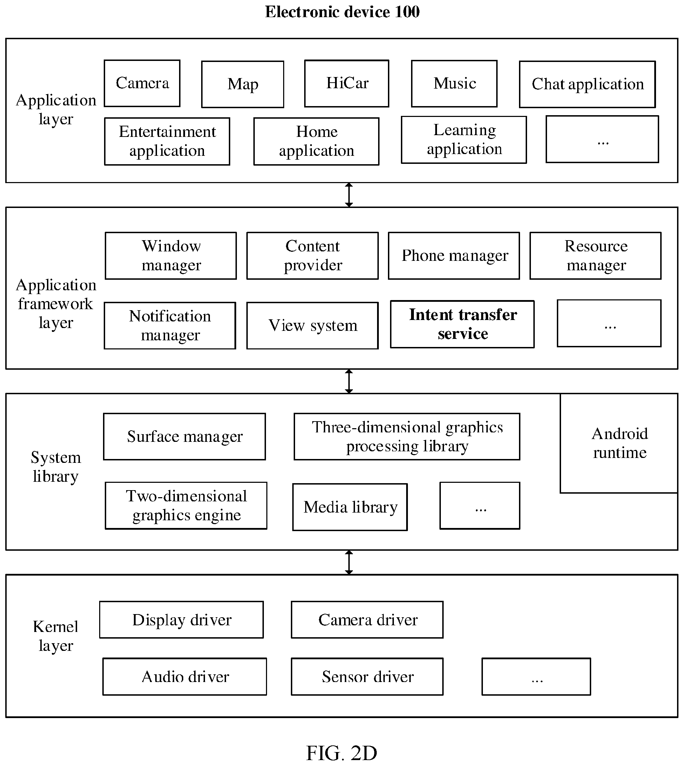

FIG. 2D shows an example of a schematic diagram of a software architecture of the electronic device 100.

In the layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2D, the application packages may include applications such as Camera, Map, HiCar, Music, a chat application, an entertainment application, a home application, and a learning application.

The application framework layer provides an application programming interface (application programming interface, API) and a programming framework for an application at the application layer. The application framework layer includes some predefined functions.

As shown in FIG. 2D, the application framework layer may include a window manager, a content provider, a view system, a phone manager, a resource manager, a notification manager, an intent transfer service, and the like.

The window manager is configured to manage a window program. The window manager may obtain a size of the display, determine whether there is a status bar, perform screen locking, take a screenshot, and the like.

The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device 100, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring a user interaction.

The intent transfer service may perform intent recognition based on an application at the application layer. In some embodiments, the intent transfer service may perform intent recognition based on a user interface of the application displayed by the electronic device 100. The electronic device 100 may implement a recognized intent through the electronic device 200. In a case, a service that is on the electronic device 100 and that is used to implement the intent may be transferred to the electronic device 200. In another case, the electronic device 100 may send the recognized intent to the electronic device 200, and the electronic device 200 implements the recognized intent.

In some embodiments, the intent transfer service may provide a service for a system application at the application layer, to perform intent recognition on a third-party application at the application layer. For example, the system application is the HiCar application, and the third-party application is the map application, the chat application, the entertainment application, the home application, the learning application, or the like.

This is not limited thereto. In some other embodiments, the intent transfer service may be a built-in service of an application at the application layer. For example, a server (which may be referred to as an application server for short) corresponding to the application may provide the intent transfer service for the application. When receiving a user operation, the electronic device 100 may send content on a currently displayed user interface to the application server. The application server performs intent recognition based on the interface content, and sends recognized intent information to the electronic device 100. The electronic device 100 implements the intent information through the electronic device 200.

In some embodiments, the intent transfer service may correspond to the intent parsing module shown in FIG. 1B, optionally, the page parsing module, and optionally, the intent trigger module. For details, refer to the description in FIG. 1B. Details are not described again.

In some embodiments, an application at the application layer may correspond to the intent trigger module shown in FIG. 1B. In some embodiments, an application at the application layer may correspond to the display module shown in FIG. 1B.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files at the application layer and the application framework layer as binary files. The virtual machine is configured to implement functions such as object lifecycle management, stack management, thread management, security and exception management, and garbage collection.

The system library may include a plurality of functional modules, such as a surface manager (surface manager), a media library (Media Library), a three-dimensional graphics processing library (for example, OpenGL ES), and a 2D graphics engine (for example, SGL).

The surface manager is configured to: manage a display subsystem, and provide fusion of 2D and 3D layers for a plurality of applications.

The media library supports playback and recording in a plurality of commonly used audio and video formats, and static image files. The media library may support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver. In some embodiments, the sensor driver may correspond to a detection module shown in FIG. 1B.

The following describes an example of a working process of software and hardware of the electronic device 100 with reference to a navigation scenario.

It is assumed that the display 194 displays a user interface of the chat application, and the user interface is used to display address information of a place 1. When the touch sensor 180K receives a touch operation, a corresponding hardware interrupt is sent to the kernel layer. The kernel layer processes the touch operation into an original input event (including information such as touch coordinates and a timestamp of the touch operation). The original input event is stored at the kernel layer. The application framework layer obtains the original input event from the kernel layer, and identifies a control corresponding to the input event. For example, the touch operation is a touch tap operation, and a control corresponding to the tap operation is a navigation control. The map application invokes an interface of the application framework layer to start the map application, then invokes the kernel layer to start the display driver, to display a navigation interface through the display 194. A destination in the navigation interface is the place 1.

A software architecture of the electronic device 200 is similar to the software architecture of the electronic device 100. For a specific example, refer to FIG. 2D.

The following describes a display method in embodiments of this application with reference to application scenarios.

Scenario 1: The electronic device 100 is a smartphone, and the electronic device 200 is an on-board computer. When the electronic device 100 displays a user interface including address information, if a user operation (for example, a shake operation) is received, the electronic device 100 may perform an intent operation: setting, to a destination, a place indicated by the address information and performing navigation, and send, to the electronic device 200 for an output, an audio stream and a video stream (which are referred to as audio and video streams for short) corresponding to the performed intent operation. In this way, a user does not need to manually input the address information in the map application on the electronic device 200 and operate the navigation control. In other words, the user does not need to manually trigger execution of the intent operation, to implement a more efficient and convenient interaction.

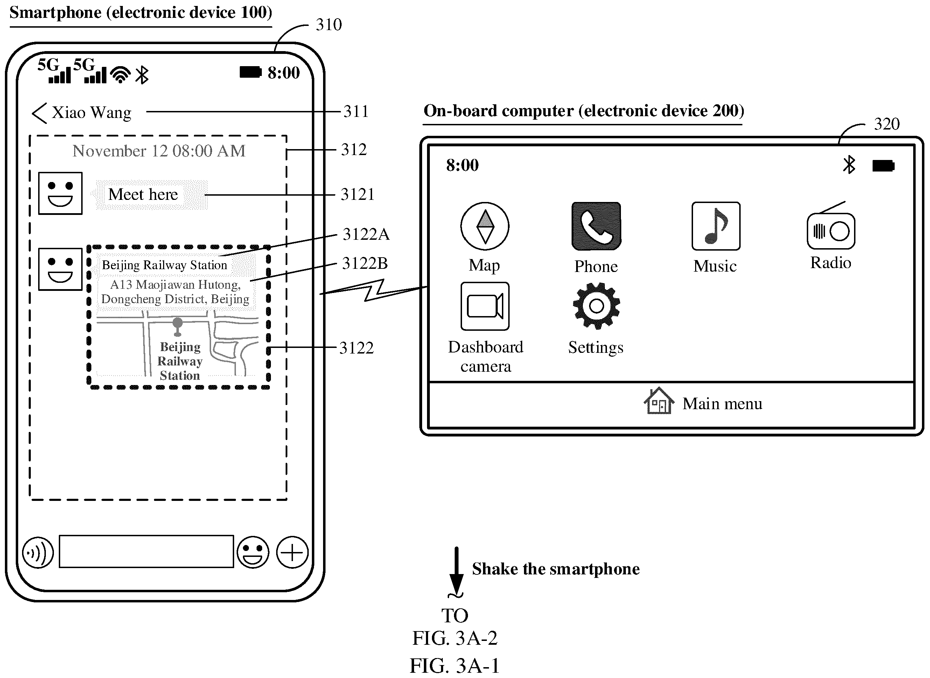

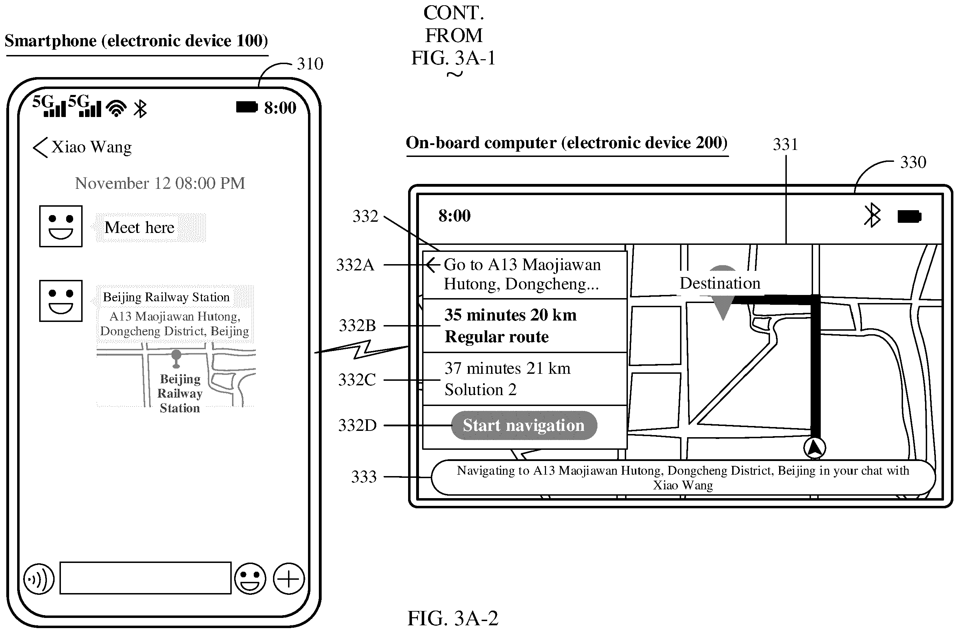

FIG. 3A-1 to FIG. 3C show examples of user interface embodiments in an application scenario (for example, the foregoing scenario 1).

As shown in FIG. 3A-1, the electronic device 100 may display a user interface 310 of a chat application, and the user interface 310 may include a session name 311 and a chat window 312. It is assumed that a current session is a two-party session. The session name 311 may include a name "Xiao Wang" of a chat participant. This is not limited thereto. If a current session is a multiparty session, the session name 311 may include a name of the current session, for example, a group name. The chat window 312 may be configured to display a chat history of the current session, for example, a message 3121 and a message 3122 that are sent by the chat participant. The message 3121 includes a text "Meet here", the message 3122 includes a place name 3122A (including a text "Beijing Railway Station"), and location information 3122B (including a text "A13 Maojiawan Hutong, Dongcheng District, Beijing") of "Beijing Railway Station", and the message 3122 is a location card indicating a geographical location "Beijing Railway Station".

As shown in FIG. 3A-1, the electronic device 100 may be connected to the electronic device 200, for example, by using a HUAWEI HiCar function. The electronic device 200 may display a home screen 320. The home screen 320 may include one or more application icons such as a Map application icon, a Phone application icon, a Music application icon, a Radio application icon, a Dashboard camera application icon, and a Settings application icon. The home screen 320 may further include a main menu control, and the main menu control may be used to return to the home screen 320.

As shown in FIG. 3A-1, the electronic device 100 may receive a user operation (for example, shake the electronic device 100), and recognize a currently displayed user interface 310 in response to the user operation. In some embodiments, the electronic device 100 recognizes the message 3122 to obtain the location information of the geographical location "Beijing Railway Station", and determines, based on the location information, intent information: performing navigation on the geographical location "Beijing Railway Station". Optionally, the electronic device 100 may alternatively determine, with reference to the message 3121, that the user wants to go to the geographical location "Beijing Railway Station", and determine the intent information based on a user intent. Optionally, it may be understood that the intent information corresponds to a navigation service, or it may be understood that the intent information corresponds to the message 3122 (the location card). The electronic device 100 may perform, based on the obtained intent information, an intent operation corresponding to the intent information, where the intent operation is setting a destination to the location information of the geographical location "Beijing Railway Station" and performing navigation. Then, the electronic device 100 may send, to the electronic device 200 for an output, audio and video streams corresponding to the performed intent operation. For details, refer to FIG. 3A-2. Optionally, it may be understood that the intent operation is used to implement the navigation service, or it may be understood that the intent operation corresponds to the message 3122 (the location card).

As shown in FIG. 3A-2, the electronic device 200 may display a user interface 330 of the Map application. The user interface 330 is used to display information related to the navigation service. The user interface 330 may include a map window 331, a route window 332, and a prompt box 333.

Specifically, the map window 331 is used to display a schematic diagram of a selected navigation route on a map.

The route window 332 includes navigation information 332A, a route 332B, a route 332C, and a navigation control 332D. The navigation information 332Aincludes a text "Go to A13 Maojiawan Hutong, Dongcheng..." indicating the location information of a navigation destination. The navigation information 332A shows only a part of the location information of the destination. The electronic device 200 may display all location information of the destination in response to a touch operation (for example, a tap operation) performed on the navigation information 332A. The route 332B and the route 332C may indicate two navigation routes. Compared with the route 332C, the route 332B is highlighted (for example, a text of the route 332B is bold and highlighted, but a text of the route 332C is not bold or highlighted), which indicates that a currently selected navigation route is a navigation route indicated by the route 332B. In this case, the map window 331 is used to display, on the map, a schematic diagram of the navigation route indicated by the route 332B. In response to a touch operation (for example, a tap operation) performed on the route 332C, the electronic device 200 may cancel highlighting of the route 332B, and highlight the route 332C. In this case, the selected navigation route is a navigation route indicated by the route 332C, and the map window 331 displays, on the map, a schematic diagram of the navigation route indicated by the route 332C. The navigation control 332D may be configured to enable a navigation function. In response to a touch operation (for example, a tap operation) performed on the navigation control 332D, the electronic device 200 may perform navigation based on the currently selected route (the navigation route indicated by the route 332B in the user interface 330).

The prompt box 333 is used to display information about the navigation service that is being currently performed. The prompt box 333 includes a text "Navigating to A13 Maojiawan Hutong, Dongcheng District, Beijing in a chat with Xiao Wang" that may indicate detailed location information of the destination of the navigation service. The navigation service is triggered by a chat session with the chat participant "Xiao Wang" in the chat application, and the detailed location information of the destination is obtained from the chat session.

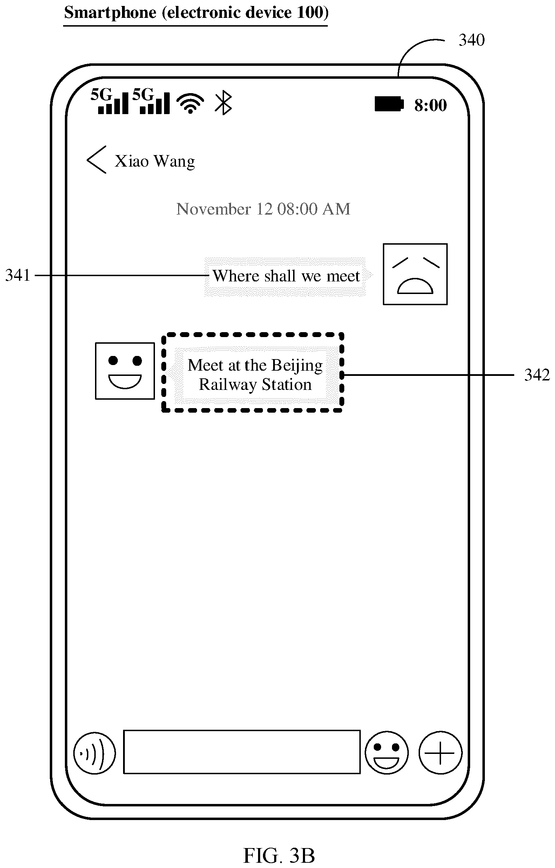

In an example shown in FIG. 3A-1 and FIG.3A-2, the address information (that is, the message 3122) included in the user interface 310 displayed by the electronic device 100 is displayed in a form of a card. This is not limited thereto. In some other examples, the address information may alternatively be displayed in a form of a text. For a specific example, refer to FIG. 3B. This is not limited in this application.

As shown in FIG. 3B, the electronic device 100 may display a user interface 340 of the chat application. The user interface 340 is similar to the user interface 310 shown in FIG. 3A-1, and the two user interfaces differ in chat histories of current sessions. The user interface 340 may include a message 341 and a message 342. The message 341 includes a text "Where shall we meet", and the message 342 includes a text "Meet at the Beijing Railway Station". The electronic device 100 may be connected to the electronic device 200, and the electronic device 200 may display the home screen 320 shown in FIG. 3A-1. The electronic device 100 may receive a user operation (for example, shake the electronic device 100), and recognize the currently displayed user interface 340 in response to the user operation. In some embodiments, the electronic device 100 recognizes the message 342 to obtain information indicating that the user wants to go to the geographical location "Beijing Railway Station", and determines, based on the obtained information, intent information: performing navigation on the geographical location "Beijing Railway Station". Optionally, it may be understood that the intent information corresponds to the message 342. The electronic device 100 may perform, based on the obtained intent information, an intent operation corresponding to the intent information, where the intent operation is setting a destination to the location information of the geographical location "Beijing Railway Station" and performing navigation. Then the electronic device 100 may send, to the electronic device 200 for an output, audio and video streams corresponding to the performed intent operation. For details, refer to FIG. 3A-2. Optionally, it may be understood that the intent operation corresponds to the message 342.

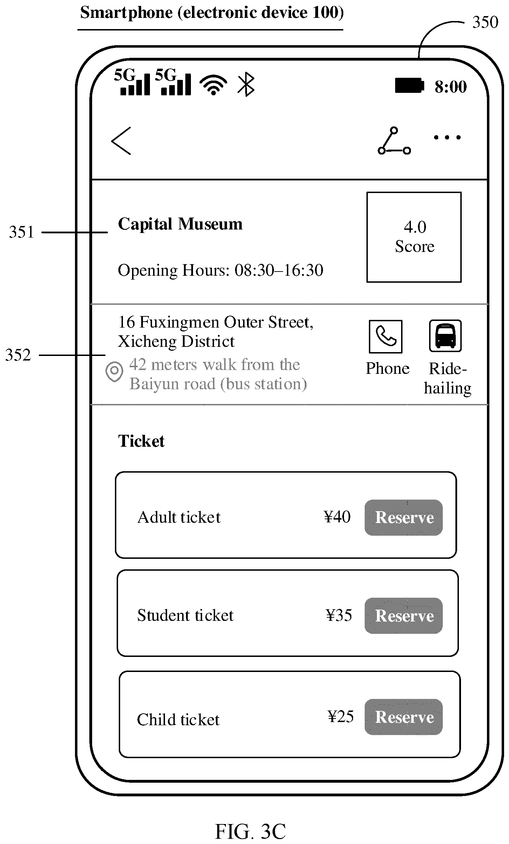

In the foregoing examples, the address information displayed by the electronic device 100 is displayed in a form of a chat message (namely, the message 3122 in the user interface 310 or the message 342 in the user interface 340). This is not limited thereto. In some other examples, the address information may alternatively be displayed in place description. For a specific example, refer to FIG. 3C. This is not limited in this application.

As shown in FIG. 3C, the electronic device 100 may display a user interface 350 of an entertainment application. The user interface 350 includes a place name 351 and a location control 352. The place name 351 includes a text "Capital Museum" that is a name of a place displayed in the user interface 350. The location control 352 includes a text "16 Fuxingmen Outer Street, Xicheng District" that is location information of the place displayed in the user interface 350, and may indicate address information of the place "Capital Museum". The electronic device 100 may be connected to the electronic device 200, and the electronic device 200 may display the home screen 320 shown in FIG. 3A-1. The electronic device 100 may receive a user operation (for example, shake the electronic device 100), recognize the currently displayed user interface 350 in response to the user operation to obtain the location information of the place named "Capital Museum", and determine, based on the location information, intent information: performing navigation on the place "Capital Museum". Optionally, it may be understood that the intent information corresponds to the location control 352. The electronic device 100 may send indication information to the electronic device 200 based on the obtained intent information, and the electronic device 200 may perform, based on the indication information, an intent operation corresponding to the intent information, where the intent operation is setting a destination to the location information of the place "Capital Museum" and performing navigation. A specific example is similar to that in FIG. 3A-2. A difference lies in destinations and navigation routes. Optionally, it may be understood that the intent operation corresponds to the location control 352.

In the embodiments shown in FIG. 3A-1 to FIG. 3B, the electronic device 100 performs the intent operation corresponding to the intent information, and then sends, to the electronic device 200 for the output, the audio and video streams corresponding to the intent operation. It may be understood that content on the electronic device 100 is projected onto the electronic device 200 for an output, and a service on the electronic device 100 is actually triggered. In the embodiment shown in FIG. 3C, the electronic device 100 indicates the electronic device 200 to perform the intent operation corresponding to the intent information, and a service on the electronic device 200 is actually triggered. This is not limited thereto. In specific implementation, in the embodiments shown in FIG. 3A-1 to FIG. 3B, the service on the electronic device 200 may alternatively be triggered, and in the embodiment shown in FIG. 3C, the service on the electronic device 100 may alternatively be triggered. In the following embodiment, an example in which the service on the electronic device 200 is triggered is used for description. However, this is not limited in specific implementation.

In a possible implementation, a service type corresponding to the intent information determined by the electronic device 100 is related to a device type of the electronic device 200 connected to the electronic device 100.

Scenario 2: The electronic device 100 is a smartphone, and when displaying a user interface including address information and video information, the electronic device 100 receives a user operation (for example, a shake operation). If the electronic device 200 connected to the electronic device 100 is an on-board computer, the electronic device 100 sends indication information to the electronic device 200 in response to the user operation, and the electronic device 200 may perform, based on the indication information, an intent operation corresponding to a navigation service, where the intent operation is setting, to a destination, a place indicated by the address information and performing navigation. For a specific example, refer to FIG. 4A-1 and FIG. 4A-2. If the electronic device 200 connected to the electronic device 100 is a smart television, the electronic device 100 sends indication information to the electronic device 200 in response to the user operation, and the electronic device 200 may perform, based on the indication information, an intent operation corresponding to a video service, where the intent operation is playing a video indicated by the video information. For a specific example, refer to FIG. 4B-1 and FIG. 4B-2. In this way, a requirement of the user in an actual application scenario is better met, and interaction accuracy is further improved.

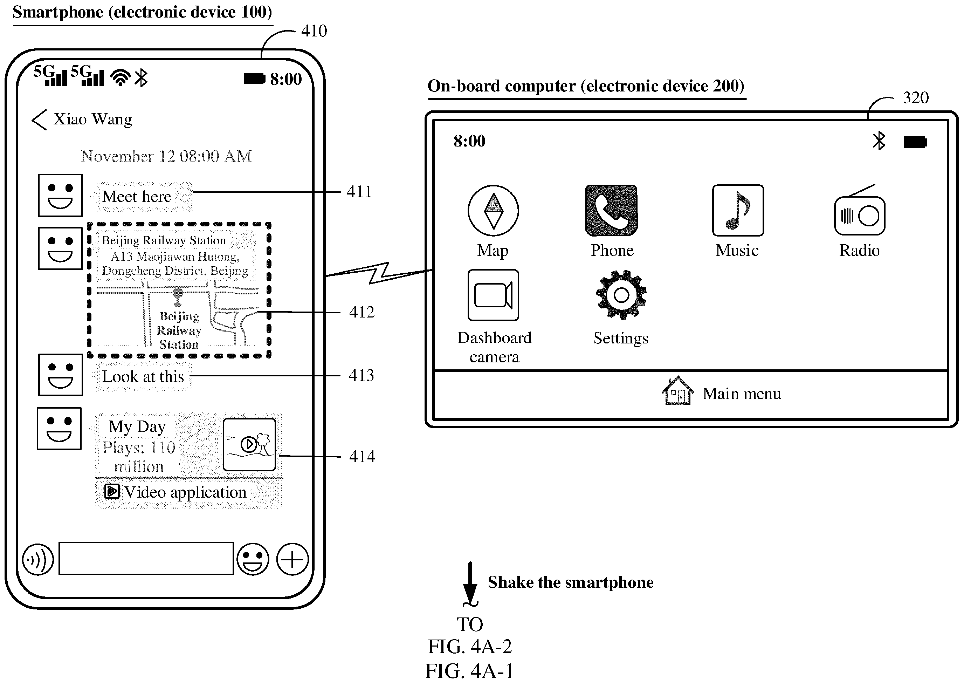

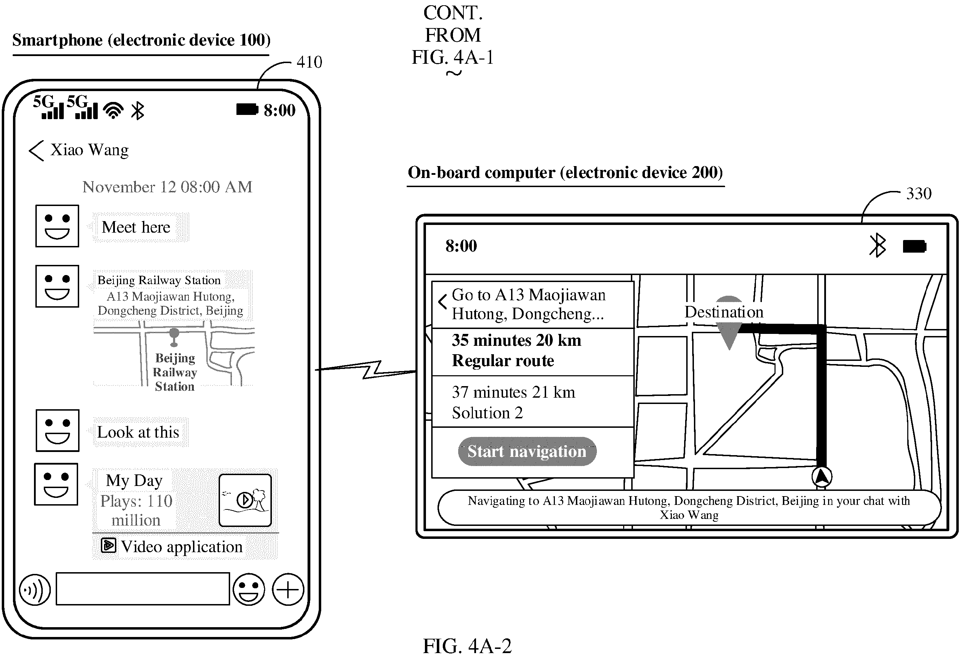

FIG. 4A-1 to FIG. 4B-2 show examples of user interface embodiments in an application scenario (for example, the foregoing scenario 2).

As shown in FIG. 4A-1, the electronic device 100 may display a user interface 410 of the chat application. The user interface 410 is similar to the user interface 310 shown in FIG. 3A-1, and the two user interfaces differ in different chat histories of current sessions. The user interface 410 may include a message 411, a message 412, a message 413, and a message 414. The message 411 and the message 412 are respectively the message 3121 and the message 3122 in the user interface 310 shown in FIG. 3A-1. Details are not described again. The message 413 includes a text "Look at this", the message 414 is a message for displaying a video in a form of a card, and the message 414 includes a text "My Day" that is a name of the displayed video. The electronic device 100 may be connected to the electronic device 200 (an on-board computer), and the electronic device 200 (the on-board computer) may display the home screen 320 shown in FIG. 3A-1. The electronic device 100 may receive a user operation (for example, shake the electronic device 100), and recognize the currently displayed user interface 410 in response to the user operation. In some embodiments, the electronic device 100 recognizes the user interface 410 to obtain information indicating that the message 412 corresponds to a navigation service, and the message 414 corresponds to a video service. The electronic device 100 may determine a corresponding navigation service based on a device type (the on-board computer) of a connected device. For example, a correspondence between the on-board computer and the navigation service is preset. In this case, the electronic device 100 recognizes the message 412, and determines intent information corresponding to the navigation service, where the intent information indicates to perform navigation on the geographical location "Beijing Railway Station". The electronic device 100 may send indication information to the electronic device 200 (the on-board computer) based on the obtained intent information, and the electronic device 200 (the on-board computer) may perform, based on the indication information, an intent operation corresponding to the intent information, where the intent operation is setting a destination to the location information of the geographical location "Beijing Railway Station" and performing navigation. For details, refer to FIG. 4A-2. A user interface displayed by the electronic device 200 in FIG. 4A-2 is consistent with the user interface displayed by the electronic device 200 in FIG. 3A-2.

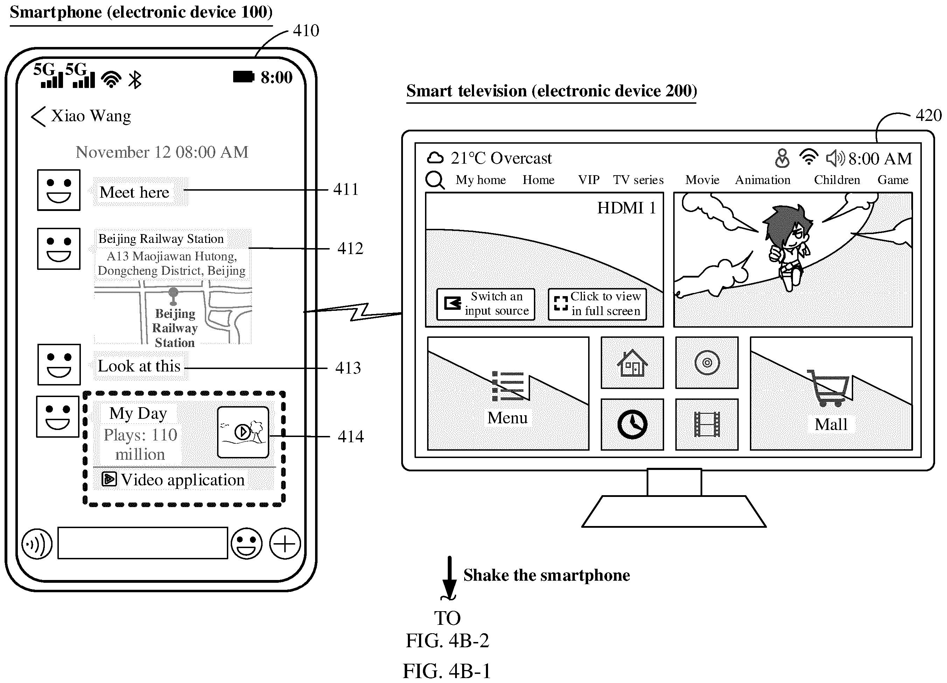

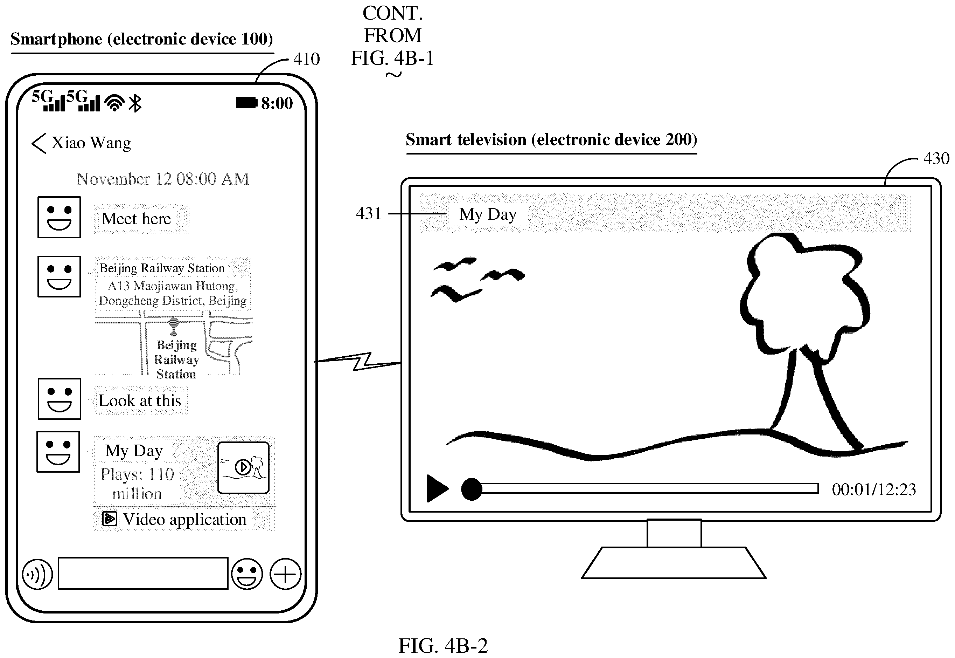

As shown in FIG. 4B-1, the electronic device 100 may display the user interface 410 shown in FIG. 4A-1. The electronic device 100 may be connected to the electronic device 200 (a smart television), and the electronic device 200 (the smart television) may display a home screen 420. The home screen 420 may include one or more categories, for example, a TV series category, a movie category, an animation category, a children category, and a game category. The electronic device 100 may receive a user operation (for example, shake the electronic device 100), and recognize the currently displayed user interface 410 in response to the user operation. In some embodiments, the electronic device 100 recognizes the user interface 410 to obtain information indicating that the message 412 corresponds to a navigation service, and the message 414 corresponds to a video service. The electronic device 100 may determine a corresponding navigation service based on a device type (the smart television) of a connected device. For example, a correspondence between the smart television and the video service is preset. In this case, the electronic device 100 recognizes the message 414, and determines intent information corresponding to the video service, where the intent information indicates to play a video named "My Day". The electronic device 100 may send indication information to the electronic device 200 (the smart television) based on the obtained intent information, and the electronic device 200 (the smart television) may perform, based on the indication information, an intent operation corresponding to the intent information, where the intent operation is playing the video named "My Day". For details, refer to FIG. 4B-2. As shown in FIG. 4B-2, the electronic device 200 may display a user interface 430. The user interface 430 includes a title 431. The title 431 includes a text "My Day" that is a name of the currently played video.

This is not limited to the foregoing examples. In some other example scenarios, the user may select to-be-recognized service information, and a service type corresponding to intent information is determined based on user selection. For a specific example, refer to FIG. 4C-1 and FIG. 4C-2.

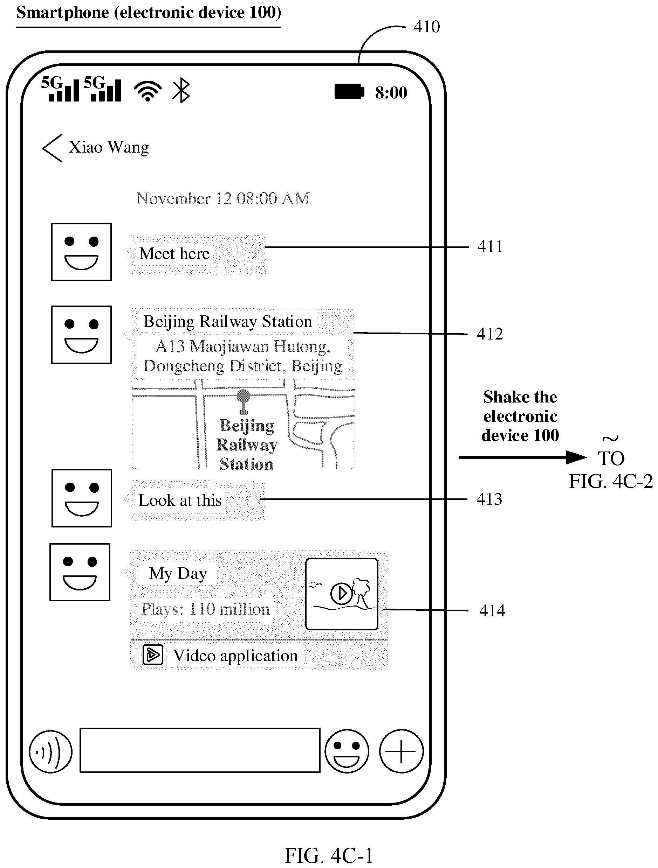

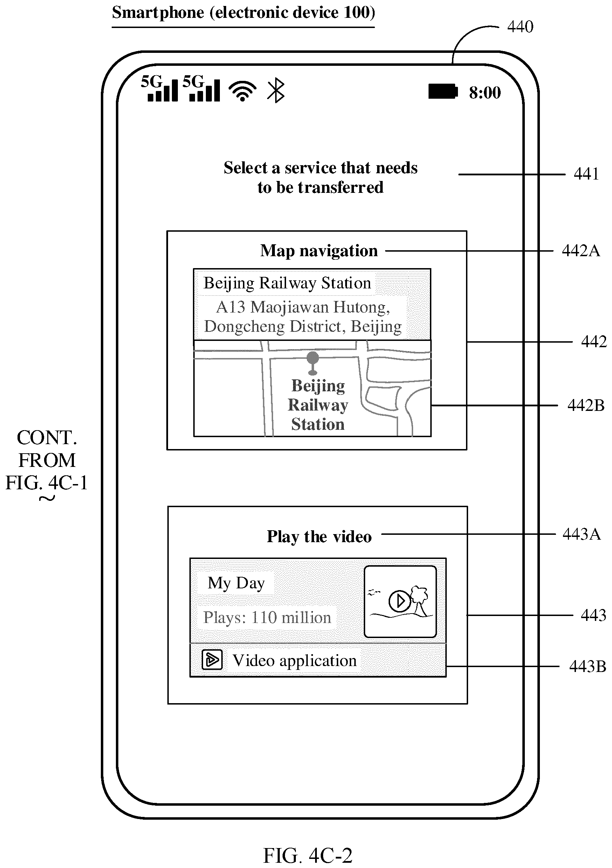

As shown in FIG. 4C-1, the electronic device 100 may display the user interface 410 shown in FIG. 4A-1. The electronic device 100 may receive a user operation (for example, shake the electronic device 100), and display, in response to the user operation, a user interface 440 shown in FIG. 4C-2.

As shown in FIG. 4C-2, the user interface 440 may include prompt information 441, a prompt box 442, and a prompt box 443. The prompt information 441 includes a text "Select a service that needs to be transferred" that is used to prompt the user to select to-be-recognized service information.

The prompt box 442 includes a service name 442A and service information 442B, where the service name 442A includes a text "Map navigation", and the service information 442B is the message 412 in the user interface 410 shown in FIG. 4C-1. The electronic device 100 may determine, in response to a touch operation (for example, a tap operation) performed on the prompt box 442, that the to-be-recognized service information is the message 412 in the user interface 410, and recognize the message 412 to obtain the intent information corresponding to the navigation service, where the intent information indicates to perform navigation on the geographical location "Beijing Railway Station". The electronic device 100 may send indication information to the connected electronic device 200 based on the obtained intent information, and the electronic device 200 may perform, based on the indication information, an intent operation corresponding to the intent information. For example interfaces displayed before and after the electronic device 200 receives the indication information, refer to the user interface 320 shown in FIG. 4A-1 and the user interface 330 shown in FIG. 4A-2.

The prompt box 443 includes a service name 443A and service information 443B, where the service name 443A includes a text "Play the video", and the service information 443B is the message 414 in the user interface 410 shown in FIG. 4C-1. The electronic device 100 may determine, in response to a touch operation (for example, a tap operation) performed on the prompt box 443, that the to-be-recognized service information is the message 414 in the user interface 410, and recognize the message 414 to obtain the intent information corresponding to the video service, where the intent information indicates to play the video named "My Day". The electronic device 100 may send indication information to the connected electronic device 200 based on the obtained intent information, and the electronic device 200 may perform, based on the indication information, an intent operation corresponding to the intent information. For example interfaces displayed before and after the electronic device 200 receives the indication information, refer to the user interface 420 shown in FIG. 4B-1 and the user interface 430 shown in FIG. 4B-2.

Scenario 3: The electronic device 100 is a smartphone, and the electronic device 200 is a smart television. When displaying a user interface including video information, if a user operation (for example, a shake operation) is received, the electronic device 100 may send indication information to the electronic device 200. The electronic device 200 may perform, based on the indication information, an intent operation: playing a video indicated by the video information. In this way, the user does not need to manually trigger execution of the intent operation, to implement a more efficient and convenient interaction.

FIG. 5A and FIG. 5B show an example of a user interface embodiment in another application scenario (for example, the foregoing scenario 3).

As shown in FIG. 5A, the electronic device 100 may display a user interface 510 of an entertainment application. The user interface 510 includes a name 521. The name 521 includes a text "Movie 1" that is a name of a movie displayed in the user interface 510. The user interface 510 is used to display details about the "Movie 1", such as related videos, stills and movie reviews. The electronic device 100 may be connected to the electronic device 200, and the electronic device 200 may display the home screen 420 shown in FIG. 4B-1. The home screen 420 further includes a search control 421. The search control 421 is configured to implement a search function. A user may input, based on the search function, a desired video to be viewed, and play the video. The electronic device 100 may receive a user operation (for example, shake the electronic device 100), recognize the currently displayed user interface 510 in response to the user operation to obtain information about the movie named "Movie 1", and determine, based on the information, intent information: playing the movie named "Movie 1". The electronic device 100 may send indication information to the electronic device 200 based on the obtained intent information, and the electronic device 200 may perform, based on the indication information, an intent operation corresponding to the intent information, where the intent operation is playing the movie named "Movie 1". For details, refer to FIG. 5B.

As shown in FIG. 5B, the electronic device 200 may display a user interface 520. The user interface 520 includes a title 521. The title 521 includes a text "Movie 1" that is a name of the currently played video. In a case, the electronic device 100 may obtain a video stream of "Movie 1" from a video application, and continuously send the video stream to the electronic device 200 for playing. It may be understood as projecting a video on the electronic device 100 onto the electronic device 200 for playing. In this way, the user does not need to start the video application on the electronic device 100 (the smartphone) and a playing interface of the video, operate a projection control, and select a device (the smart television) onto which the video is to be projected. In another case, after receiving the indication information, the electronic device 200 searches for and plays a video. It may be understood as playing the video on the electronic device 200. In this way, the user does not need to search for the video on the electronic device 200 (the smart television) (for example, search for the video by using the search control 421 in the user interface 420 shown in FIG. 5A). Therefore, user operations are simplified, and interaction efficiency is greatly improved.

In the example shown in FIG. 5A and FIG. 5B, the video information displayed by the electronic device 100 is displayed in a movie introduction. This is not limited thereto. In some other examples, the video information may alternatively be displayed in a form of a chat message, for example, the message 414 in the user interface 410 shown in FIG. 4B-1. For a specific scenario example, refer to FIG. 4B-1 and FIG. 4B-2. This is not limited in this application.

Scenario 4: The electronic device 100 is a smartphone, and the electronic device 200 is a smart food processor. When displaying a user interface including recipe information, if a user operation (for example, a shake operation) is received, the electronic device 100 may send indication information to the electronic device 200. The electronic device 200 may perform, based on the indication information, an intent operation: working based on the recipe information. In this way, a user does not need to search for a recipe on the smart food processor to perform cooking. In other words, the user does not need to manually trigger execution of the intent operation, to implement a more efficient and convenient interaction.

FIG. 6A and FIG. 6B show an example of a user interface embodiment in another application scenario (for example, the foregoing scenario 4).

As shown in FIG. 6A, the electronic device 100 may display a user interface 610 of a home application. The user interface 610 includes a title 611. The title 611 includes a text "Crispy pork belly" that is a name of a recipe displayed in the user interface 610. The user interface 610 is used to display details about the recipe named "Crispy pork belly", such as ingredient information 612 and cooking steps 613. The electronic device 100 may be connected to the electronic device 200, and the electronic device 200 may display a home page 620. The home page 620 may include one or more categories such as a daily recipe category, a Chinese category, and a Western category. The electronic device 100 may receive a user operation (for example, shake the electronic device 100), recognize the currently displayed user interface 610 in response to the user operation to obtain information about the recipe named "Crispy pork belly", and determine, based on the information, intent information: cooking a dish corresponding to the recipe. The electronic device 100 may send indication information to the electronic device 200 based on the obtained intent information, and the electronic device 200 may perform, based on the indication information, an intent operation corresponding to the intent information, where the intent operation is working based on the recipe. For details, refer to FIG. 6B.

As shown in FIG. 6B, the electronic device 200 may display a user interface 630. The user interface 630 includes a title 631 and step information 632. The title 631 includes the text "Crispy pork belly" that is the name of the recipe currently in use. The step information 632 indicates cooking steps of the recipe currently in use, and the cooking steps correspond to the cooking steps 613 in the user interface 610 shown in FIG. 6A. The user interface 630 may indicate that the electronic device 200 is currently working based on the recipe named "Crispy pork belly".

This is not limited to the foregoing example. In some other examples, when recognizing the currently displayed user interface 610, the electronic device 100 may recognize only the dish name "Crispy pork belly" on the recipe, and determine, based on the dish name, intent information: cooking a dish named "Crispy pork belly". After receiving the indication information, the electronic device 200 may perform an intent operation corresponding to the intent information, where the intent operation is searching for the dish name to obtain the corresponding recipe, and working based on the found recipe.

Scenario 5: The electronic device 100 is a smartphone used by a parent, and the electronic device 200 is a tablet computer used by a child for learning. When displaying a user interface including learning information, if a user operation (for example, a shake operation) is received, the electronic device 100 may send indication information to the electronic device 200. The electronic device 200 may perform, based on the indication information, an intent operation: displaying all or a part of the learning information. In this way, the parent does not need to search the tablet computer for the learning information for the child to learn and use. In other words, the user does not need to manually trigger execution of the intent operation, to implement a more efficient and convenient interaction.

FIG. 7A-1 and FIG. 7A-2 show an example of a user interface embodiment in another application scenario (for example, the foregoing scenario 5).

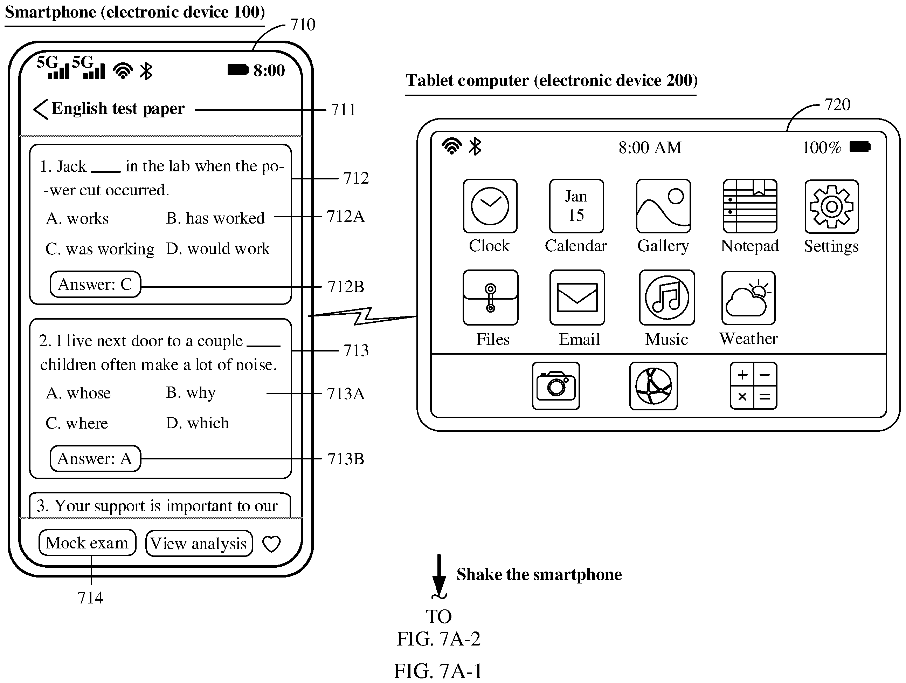

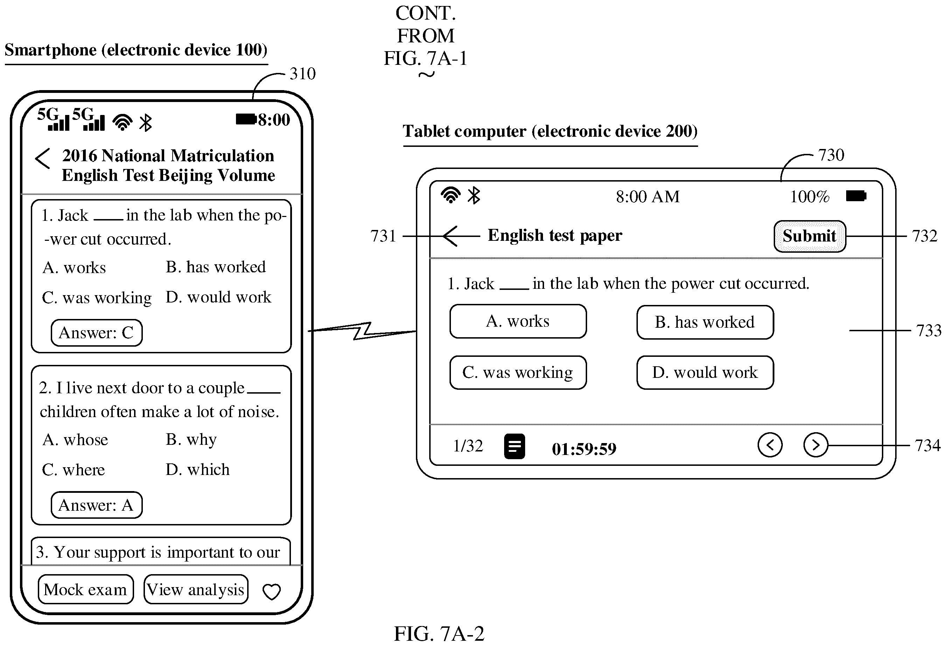

As shown in FIG. 7A-1, the electronic device 100 may display a user interface 710 of a learning application. The user interface 710 includes a title 711. The title 711 includes a text "English test paper" indicating that the user interface 710 is used to display details about a test paper named "English test paper". The user interface 710 further includes details about a plurality of exercises such as an exercise 712 and an exercise 713. The exercise 712 includes a question 712A and an answer 712B, and the exercise 713 includes a question 713A and an answer 713B. The user interface 710 further includes an exam control 714. The exam control 714 is configured to provide a function of conducting a mock exam for the current test paper. The electronic device 100 may be connected to the electronic device 200, and the electronic device 200 may display a home screen 720. The home screen 720 may include one or more application icons such as a Clock application icon, a Calendar application icon, a Gallery application icon, and a Settings application icon. The electronic device 100 may receive a user operation (for example, shake the electronic device 100), recognize the currently displayed user interface 720 in response to the user operation to obtain information about the test paper named "English test paper", and determine, based on the information, intent information: conducting the mock exam for the test paper. The electronic device 100 may send indication information to the electronic device 200 based on the obtained intent information, and the electronic device 200 may perform, based on the indication information, an intent operation corresponding to the intent information, where the intent operation is enabling the function of conducting the mock exam for the test paper. For details, refer to FIG. 7A-2.

As shown in FIG. 7A-2, the electronic device 200 may display a user interface 730. The user interface 730 includes a title 731, a submission control 732, question information 733, and a switching control 734. The title 731 includes the text "English test paper" that is the name of the test paper of the mock exam currently being conducted. The submission control 732 is configured to end the current mock exam and display a result of the mock exam. The question information 733 displays information about a question that is currently being viewed, and the switching control 734 is configured to switch the information about the question that is currently being viewed. The user interface 730 may indicate that the function of conducting the mock exam for the test paper named "English test paper" is currently enabled.

In some embodiments, the electronic device 200 may display the result of the mock exam in response to a touch operation (for example, a tap operation) performed on the submission control 732, and send the result of the mock exam to the electronic device 100, so that the parent can efficiently and conveniently learn of a learning status of the child.

In the example shown in FIG. 7A-1 and FIG. 7A-2, the user interface 710 displayed by the electronic device 100 includes the questions and the answers, but the user interface 730 displayed after the electronic device 200 receives the indication information includes only the questions and does not include the answers. In this way, the parent does not need to search for a corresponding exercise on the electronic device 200, and does not need to manually enable the function of conducting the mock exam. This further reduces user operations, and interaction efficiency is improved.

This is not limited to the example shown in FIG. 7A-1 and FIG. 7A-2. In some other examples, the electronic device 100 may recognize, in response to an operation of shaking the electronic device 100, the exercise 712 and/or the exercise 713 in the currently displayed user interface 710, and determine, based on the exercise 712 and/or the exercise 713, intent information: practicing the exercise 712 and/or the exercise 713. In this case, after receiving indication information sent by the electronic device 100 based on the intent information, the electronic device 200 may perform a corresponding intent operation: displaying the question 712A in the exercise 712 and/or the question 713A in the exercise 713, to be used by the child for exercises. A specific example is similar to that in the user interface 730 shown in FIG. 7A-2.

This is not limited to the foregoing examples. In some other example scenarios, the user may select to-be-recognized service information, and service content corresponding to intent information is determined based on user selection. For a specific example, refer to FIG. 7B-1 and FIG. 7B-2.

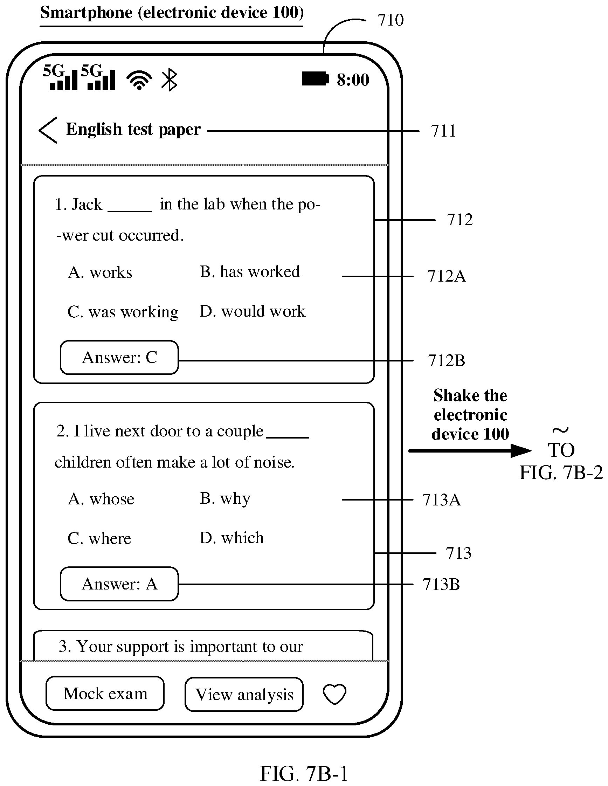

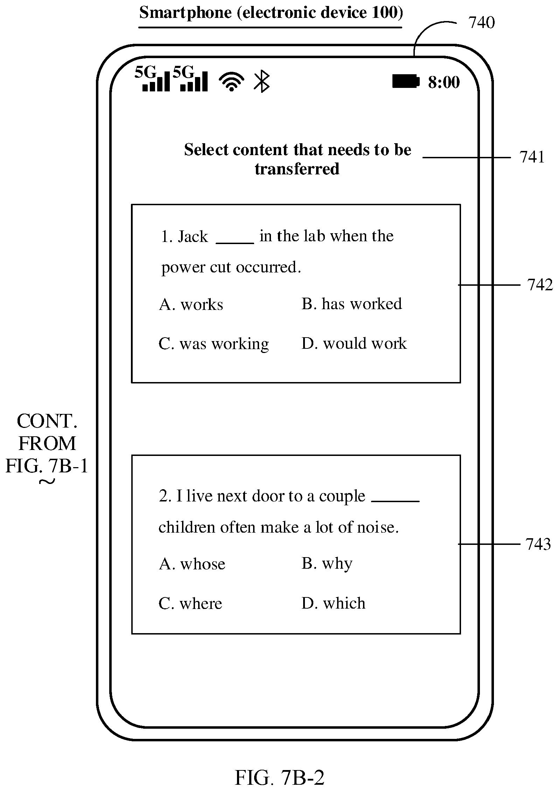

As shown in FIG. 7B-1, the electronic device 100 may display the user interface 710 shown in FIG. 7A-1. The electronic device 100 may receive a user operation (for example, shake the electronic device 100), and display, in response to the user operation, a user interface 740 shown in FIG. 7B-2.

As shown in FIG. 7B-2, the user interface 740 may include prompt information 741, a prompt box 742, and a prompt box 743. The prompt information 741 includes a text "Select content that needs to be transferred" that is used to prompt the user to select to-be-recognized service information.

The prompt box 742 is the question 712A of the exercise 712 in the user interface 740 shown in FIG. 7B-1. The electronic device 100 may determine, in response to a touch operation (for example, a tap operation) performed on the prompt box 742, that the to-be-recognized service information is the exercise 712 in the user interface 740, and recognize the exercise 712 to obtain intent information: practicing the exercise 712. In this case, after receiving indication information sent by the electronic device 100 based on the intent information, the electronic device 200 may perform a corresponding intent operation: displaying the question 712A in the exercise 712. A specific example is similar to that in the user interface 730 shown in FIG. 7A-2.

The prompt box 743 is the question 713A of the exercise 713 in the user interface 740 shown in FIG. 7B-1. The electronic device 100 may determine, in response to a touch operation (for example, a tap operation) performed on the prompt box 743, that the to-be-recognized service information is the exercise 713 in the user interface 740, and recognize the exercise 713 to obtain intent information: practicing the exercise 713. In this case, after receiving indication information sent by the electronic device 100 based on the intent information, the electronic device 200 may perform a corresponding intent operation: displaying the question 713A in the exercise 713. A specific example is similar to that in the user interface 730 shown in FIG. 7A-2.

This is not limited thereto. In the foregoing scenario 5, the electronic device 200 may alternatively be a device like a learning machine.

The user operation (which is referred to as a trigger operation for short) that triggers intent transfer in the foregoing examples is a shake operation. In some other examples, the trigger operation may alternatively be a knuckle sliding operation. For a specific example, refer to (A) in FIG. 8. In some other examples, the trigger operation may alternatively be a double-finger sliding operation. For a specific example, refer to (B) in FIG. 8. In some other examples, the trigger operation may alternatively be a gesture operation. For a specific example, refer to (C) in FIG. 8. This is not limited thereto. The trigger operation may alternatively be a knuckle tap operation, a hand-swing operation, or another operation. A specific type of the trigger operation is not limited in this application.

The following describes a display method provided in embodiments of this application.

FIG. 9 shows an example of a schematic flowchart of a display method according to an embodiment of this application.

The display method may be applied to the foregoing communication system 10. The communication system 10 may include an electronic device 100, an electronic device 200, and a network device 300.

As shown in FIG. 9, the display method may include but is not limited to the following steps.

S101: The electronic device 100 establishes a connection to the electronic device 200.

In some embodiments, the electronic device 100 may be directly connected to the electronic device 200 in a wired and/or wireless manner, for example, by using Bluetooth or Wi-Fi. In some other embodiments, the electronic device 100 may be connected to the electronic device 200 through the network device 300. For details, refer to the description of the connection between the electronic device 100 and the electronic device 200 in FIG. 1A.

S102: The electronic device 100 displays a first interface including first service information.

In some embodiments, the first service information corresponds to a first service, and different service information corresponds to different services. Specific examples are described below.

For example, the first service information is address information corresponding to a navigation service. The message 3122 in the user interface 310 shown in FIG. 3A-1, the message 342 in the user interface 340 shown in FIG. 3B, or the location control 352 in the user interface 350 shown in FIG. 3C is the first service information.

For example, the first service information is video information corresponding to a video service (for example, playing a video). The message 414 in the user interface 410 shown in FIG. 4A-1 or information (for example, the name 521) included in the user interface 510 shown in FIG. 5A is the first service information.

For example, the first service information is recipe information corresponding to a cooking service (for example, cooking based on a recipe). Information (for example, the title 611) included in the user interface 610 shown in FIG. 6A is the first service information.

For example, the first service information is learning information corresponding to a learning service (for example, practicing a question). Information (for example, the exercise 712 and the exercise 713) included in the user interface 710 shown in FIG. 7A-1 is the first service information.

S103: The electronic device 100 receives a first user operation.

A form of the first user operation may include but is not limited to a touch operation performed on a display, a voice, a motion posture (for example, a gesture), and a brain wave. For example, the first user operation is an operation of shaking the electronic device 100. For another example, the first user operation is the knuckle sliding operation shown in (A) in FIG. 8. For another example, the first user operation is the double-finger sliding operation shown in (B) in FIG. 8. For another example, the first user operation is the gesture operation shown in (C) in FIG. 8. A specific type of the first user operation is not limited in this application.

In some embodiments, the electronic device 100 may detect the first user operation through a detection module shown in FIG. 1B.

In some embodiments, the electronic device 100 may detect the first user operation through the sensor module 180 shown in FIG. 2A. For a specific example, refer to the description that the electronic device 100 may detect the user operation through the sensor module 180 in FIG. 2A.

In some embodiments, the electronic device 100 may train a fusion model. The fusion model is used to recognize a user intent, for example, is used to perform S 107.

In some other embodiments, the network device 300 trains a fusion model. For description of training the fusion model, refer to the description of training the fusion model and training the interface parsing model and/or the intent parsing model in FIG. 1B. Details are not described again.

In a case in which the electronic device 100 receives, before S103, the fusion model sent by the network device 300, the display method may further include but is not limited to the following three steps after S103.

S104: The electronic device 100 sends a first request message to the network device 300.

In some embodiments, the first request message is used to request to obtain configuration information of the fusion model.

S105: The network device 300 sends a first configuration message to the electronic device 100.

In some embodiments, the first configuration message includes the configuration information of the fusion model.

S106: The electronic device 100 updates the fusion model based on the first configuration message.

In another case in which the electronic device 100 does not receive, before S103, the fusion model sent by the network device 300, the electronic device 100 may request, from the network device, to obtain the fusion model. A specific process is similar to the foregoing steps S104 to S106. Details are not described again.

S 107: The electronic device 100 recognizes the first interface based on the fusion model, and determines intent information corresponding to the first service information.

In some embodiments, the electronic device 100 may use interface content in the first interface as an input of the fusion model, to obtain an output, namely, the intent information. The following shows some examples of the intent information.

For example, the first interface is the user interface 310 shown in FIG. 3A-1 or the user interface 340 shown in FIG. 3B, the message 3122 in the user interface 310 or the message 342 in the user interface 340 is the first service information, and the first service information is address information indicating a geographical location named "Beijing Railway Station". In this case, the intent information corresponding to the first service information is: performing navigation on the geographical location "Beijing Railway Station".

For example, the first interface is the user interface 350 shown in FIG. 3C, the location control 352 in the user interface 350 is the first service information, and the first service information is address information indicating a place named "Capital Museum". In this case, the intent information corresponding to the first service information is: performing navigation on the place "Capital Museum".

For example, the first interface is the user interface 410 shown in FIG. 4A-1, the message 414 in the user interface 410 is the first service information, and the first service information may indicate a video named "My Day". In this case, the intent information corresponding to the first service information is: playing the video named "My Day".

For example, the first interface is the user interface 510 shown in FIG. 5A, information (for example, the name 521) included in the user interface 510 is the first service information, and the first service information may indicate a movie named "Movie 1". In this case, the intent information corresponding to the first service information is: playing the movie named "Movie 1".

For example, the first interface is the user interface 610 shown in FIG. 6A, information (for example, the title 611) included in the user interface 610 is the first service information, and the first service information may indicate a recipe named "Crispy pork belly". In this case, the intent information corresponding to the first service information is: cooking a dish corresponding to the recipe.

For example, the first interface is the user interface 710 shown in FIG. 7A-1, information (for example, the exercise 712 and the exercise 713) included in the user interface 710 is the first service information, and the first service information may indicate one or more exercises (at least one exercise, for example, the exercise 712 and the exercise 713, included in a test paper named "English test paper"). In this case, the intent information corresponding to the first service information is: practicing the one or more exercises.

S108: The electronic device 100 sends indication information to the electronic device 200 based on the intent information.

In some embodiments, the electronic device 100 may perform an intent operation based on the intent information, and send multimedia data corresponding to the performed intent operation to the electronic device 200. The indication information may indicate the electronic device 200 to output the multimedia data. For example, in FIG. 1B, the intent parsing module of the electronic device 100 sends the intent information to the intent trigger module, and the intent trigger module performs the intent operation based on the intent information, and sends, to the display module of the electronic device 200 for an output, the audio and video streams corresponding to the intent operation.

In some other embodiments, the indication information sent by the electronic device 100 to the electronic device 200 includes the intent information, and the indication information may indicate the electronic device 200 to implement the intent information. For example, in FIG. 1C, the intent parsing module of the electronic device 100 sends the intent information to the intent trigger module of the electronic device 200.

S109: The electronic device 200 outputs the multimedia data.

In some embodiments, when receiving the multimedia data and the indication information that are sent by the electronic device 100, the electronic device 200 may output the multimedia data based on the indication information, for example, the embodiment shown in FIG. 1B.

In some other embodiments, when receiving the indication information sent by the electronic device 100, where the indication information includes the intent information, the electronic device 200 may perform an intent operation based on the intent information, and output the multimedia data corresponding to the performed intent operation, for example, the embodiment shown in FIG. 1C. In some embodiments, the intent operation corresponds to the first service information in the first interface. In some embodiments, that the electronic device 200 outputs the multimedia data corresponding to the performed intent operation may also be referred to as that the electronic device 200 outputs the multimedia data corresponding to the first service information.

The following shows some examples of the intent operation.

For example, the first interface is the user interface 310 shown in FIG. 3A-1 and FIG. 3A-2 or the user interface 340 shown in FIG. 3B, the message 3122 in the user interface 310 or the message 342 in the user interface 340 is the first service information, and the first service information is address information indicating a geographical location named "Beijing Railway Station". In this case, the intent operation corresponding to the first service information is: setting a destination to location information of a geographical location "Beijing Railway Station" and performing navigation. For multimedia data that corresponds to the intent operation and that is output by the electronic device 200, refer to that in the user interface 330 shown in FIG. 3A-2. For specific scenario description, refer to the description in FIG. 3A-1 and FIG. 3A-2 or FIG. 3B.

For example, the first interface is the user interface 350 shown in FIG. 3C, the location control 352 in the user interface 350 is the first service information, and the first service information is address information indicating a place named "Capital Museum". In this case, the intent operation corresponding to the first service information is: setting a destination to location information of the place "Capital Museum" and performing navigation. Multimedia data that corresponds to the intent operation and that is output by the electronic device 200 is similar to that in the user interface 330 shown in FIG. 3A-2, and a difference lies in navigation destinations. For specific scenario description, refer to the description in FIG. 3C.

For example, the first interface is the user interface 410 shown in FIG. 4A-1, the message 414 in the user interface 410 is the first service information, and the first service information may indicate a video named "My Day". In this case, the intent operation corresponding to the first service information is: playing the video named "My Day". For multimedia data that corresponds to the intent operation and that is output by the electronic device 200, refer to that in the user interface 430 shown in FIG. 4B-2. For specific scenario description, refer to the description in FIG. 4B-1 and FIG. 4B-2.

For example, the first interface is the user interface 510 shown in FIG. 5A, information (for example, the name 521) included in the user interface 510 is the first service information, and the first service information may indicate a movie named "Movie 1". In this case, the intent operation corresponding to the first service information is: playing the movie named "Movie 1". For multimedia data that corresponds to the intent operation and that is output by the electronic device 200, refer to that in the user interface 520 shown in FIG. 5B. For specific scenario description, refer to the description in FIG. 5A and FIG. 5B.

For example, the first interface is the user interface 610 shown in FIG. 6A, information (for example, the title 611) included in the user interface 610 is the first service information, and the first service information may indicate a recipe named "Crispy pork belly". In this case, the intent operation corresponding to the first service information is: working based on the recipe. For multimedia data that corresponds to the intent operation and that is output by the electronic device 200, refer to that in the user interface 630 shown in FIG. 6B. For specific scenario description, refer to the description in FIG. 6A and FIG. 6B.

For example, the first interface is the user interface 710 shown in FIG. 7A-1, information (for example, the exercise 712 and the exercise 713) included in the user interface 710 is the first service information, and the first service information may indicate one or more exercises (at least one exercise, for example, the exercise 712 and the exercise 713, included in a test paper named "English test paper"). In this case, the intent operation corresponding to the first service information is: displaying questions in the one or more exercises (without displaying answers). For multimedia data that corresponds to the intent operation and that is output by the electronic device 200, refer to that in the user interface 730 shown in FIG. 7A-2. For specific scenario description, refer to the description in FIG. 7A-1 and FIG. 7A-2.

This is not limited to the foregoing examples. In some other embodiments, if the first interface does not include the first service information, the electronic device 100 cannot recognize the intent information corresponding to the first service information, and therefore does not send the indication information to the electronic device 200, and the electronic device 200 does not perform the intent operation corresponding to the first service information. For example, the electronic device 100 and the electronic device 200 keep displaying a current interface unchanged. This is not limited thereto. The electronic device 100 may alternatively display prompt information, for example, there is no service that can be currently transferred. For example, the user interface 410 (the first interface) shown in FIG. 4A-1 includes only the message 411 and the message 413, but does not include the message 412 (the address information) or the message 414 (the video information). In this case, the electronic device 100 and the electronic device 200 may keep displaying the current interface unchanged.

For an example of the display method shown in FIG. 9, refer to FIG. 3A-1 to FIG. 3C, FIG. 4A-1 to FIG. 4C-2, FIG. 5A and FIG. 5B, FIG. 6A and FIG. 6B, and FIG. 7A-1 to FIG. 7B-2.

In the method shown in FIG. 9, when receiving the first user operation, the electronic device 100 may perform intent recognition based on a currently displayed user interface, and the electronic device 200 implements a recognized intent. In this way, a user does not need to manually trigger implementation of the intent. This reduces user operations, and more efficient and convenient interaction is implemented.

This is not limited to the example in FIG. 9. In some other embodiments, in S107, the electronic device 100 may recognize the first interface to obtain an interface recognition result. Optionally, the electronic device 100 may obtain an interface recognition result based on an interface parsing model. For details, refer to the description of the interface parsing module in FIG. 1B. Optionally, a manner of obtaining the interface parsing model by the electronic device 100 is similar to a manner of obtaining the fusion model shown in FIG. 9. The electronic device 100 may perform intent recognition based on the interface recognition result, and obtain intent information. Optionally, the electronic device 100 may obtain the intent information based on an intent parsing model. For details, refer to the description of the intent parsing module in FIG. 1B. Optionally, a manner of obtaining the intent parsing model by the electronic device 100 is similar to a manner of obtaining the fusion model shown in FIG. 9.

This is not limited to the example in FIG. 9. In some other embodiments, the electronic device 100 may not perform S107 and S 108. After receiving the first user operation, the electronic device 100 may recognize the first interface to obtain an interface recognition result, and send the interface recognition result and indication information to the electronic device 200. The indication information may indicate the electronic device 200 to implement intent information corresponding to the interface recognition result. The electronic device 200 may perform intent recognition based on the interface recognition result, obtain intent information, perform an intent operation based on the intent information, and output multimedia data corresponding to the performed intent operation. For example, the electronic device 100 includes the detection module and the interface parsing module that are shown in FIG. 1B, and the electronic device 200 includes the intent parsing module and the intent trigger module that are shown in FIG. 1B. Optionally, the electronic device 200 may obtain intent information based on an intent parsing model. Optionally, a manner in which the electronic device 200 obtains the intent parsing model is similar to a manner in which the electronic device 100 obtains the fusion model shown in FIG. 9.

This is not limited to the example in FIG. 9. In some other embodiments, the electronic device 100 may not perform S107 and S 108. After receiving the first user operation, the electronic device 100 may send, to the electronic device 200, interface content displayed by the electronic device 100 and indication information. The indication information may indicate the electronic device 200 to implement intent information corresponding to the interface content. The electronic device 200 may perform S 107 in FIG. 9 to obtain the intent information, perform an intent operation based on the intent information, and output multimedia data corresponding to the performed intent operation. For example, the electronic device 100 includes the detection module shown in FIG. 1B, and the electronic device 200 includes the interface parsing module, the intent parsing module and the intent trigger module that are shown in FIG. 1B. Optionally, the electronic device 200 may obtain an interface recognition result based on an interface parsing model. Optionally, the electronic device 200 may obtain the intent information based on an intent parsing model. Optionally, a manner in which the electronic device 200 obtains the interface parsing model and/or the intent parsing model is similar to a manner in which the electronic device 100 obtains the fusion model shown in FIG. 9. Optionally, the electronic device 200 may obtain the intent information based on the fusion model and the interface content. Optionally, a manner in which the electronic device 200 obtains the fusion model is similar to a manner in which the electronic device 100 obtains the fusion model shown in FIG. 9.

FIG. 10 is a schematic flowchart of another display method according to an embodiment of this application. A first device in the method may be the foregoing electronic device 100, and a second device in the method may be the foregoing electronic device 200. The method may include but is not limited to the following steps.

S201: The first device displays a first interface.

In some embodiments, the first interface includes first information, and the first information is related to a first service. For an example of the first information, refer to the example of the first service information in S102 in FIG. 9.

S202: The first device receives a first user operation.

In some embodiments, S202 is similar to S103 in FIG. 9. For details, refer to the description of S103 in FIG. 9.

S203: In response to a first user operation, the first device recognizes the first interface to determine intent information.

In some embodiments, the intent information indicates to execute a first instruction, where the first instruction is used to implement the first service.

In some embodiments, the first instruction is obtained by parsing the intent information. In some other embodiments, the first instruction is included in the intent information.

In some embodiments, the intent information includes the first information. For example, the first information is information indicating a first location, and the intent information indicates to perform navigation on the first location. In some embodiments, the intent information includes information related to the first information. For example, the first information is information indicating a first video. A manner of playing the first video (for example, a playing source of the first video) may be obtained based on the first information, and the intent information indicates to play the first video in the foregoing obtained manner of playing the first video.

In some embodiments, for description of recognizing the first information by the first device to determine the intent information, refer to the description of S107 in FIG. 9.

S204: The first device sends the intent information to the second device.

S205: The second device executes the first instruction based on the intent information, to generate second information.

In some embodiments, executing the first instruction by the second device may correspond to performing the intent operation described above. For an example of the intent operation, refer to the intent operation shown in FIG. 9.

In some embodiments, the second information is multimedia data generated by executing the first instruction, for example, audio data, video data, or image data.

S206: The second device displays a second interface based on the second information.

In some embodiments, the second device may output the second information, for example, play the audio data included in the second information, display the image data included in the second information, or play the video data included in the second information.

In some embodiments, for an example in which the second device displays the second interface, refer to an example in which the electronic device 200 outputs the multimedia data corresponding to the intent operation in the description of the intent operation shown in FIG. 9.

In some embodiments, the first information is the information indicating the first location. For example, the first information is the message 3122 in the user interface 310 shown in FIG. 3A-1. In this case, the first location indicated by the message 3122 is a geographical location "Beijing Railway Station". For another example, the first information is the message 342 in the user interface 340 shown in FIG. 3B or the location control 352 in the user interface 350 shown in FIG. 3C. In this case, the first location indicated by the location control 352 is a place "Capital Museum". The first service is a navigation service. The second information is display information generated by performing a navigation operation on the first location. For example, the second information is multimedia data generated by setting a destination to location information of a geographical location "Beijing Railway Station" and performing navigation. In this case, the second interface displayed by the second device based on the second information is the user interface 330 shown in FIG. 3A-2. For another example, the second information is multimedia data generated by setting a destination to location information of a place "Capital Museum" and performing navigation. For specific scenario description, refer to the description in FIG. 3A-1 and FIG. 3A-2, FIG. 3B, or FIG. 3C.

In some other embodiments, the first information is the information indicating the first video. For example, the first information is the message 414 in the user interface 410 shown in FIG. 4A-1. In this case, a name of the first video indicated by the message 414 is "My Day". For another example, the first information is information (for example, the name 521) included in the user interface 510 shown in FIG. 5A. In this case, a name of the first video indicated by the information is "Movie 1". The first service is a video playing service. The second information is display information generated by playing the first video. For example, the second information is multimedia data generated by playing the video "My Day". In this case, the second interface displayed by the second device based on the second information is the user interface 430 shown in FIG. 4B-2. For another example, the second information is multimedia data generated by playing the video "Movie 1". In this case, the second interface displayed by the second device based on the second information is the user interface 520 shown in FIG. 5B. For specific scenario description, refer to the description in FIG. 4B-1 and FIG. 4B-2 or FIG. 5A and FIG. 5B.

In some other embodiments, the first information is information indicating a first recipe, for example, information (such as the title 611) included in the user interface 610 shown in FIG. 6A. In this case, a name of the first recipe indicated by the information is "Crispy pork belly". The first service is a cooking service. The second information is display information generated by implementing the cooking service corresponding to the first recipe, for example, multimedia data generated by working based on the recipe "Crispy pork belly". In this case, the second interface displayed by the second device based on the second information is the user interface 630 shown in FIG. 6B. For specific scenario description, refer to the description in FIG. 6A and FIG. 6B.

In some other embodiments, the first information is information indicating a first question and an answer to the first question, for example, the exercise 712 in the user interface 710 shown in FIG. 7A-1, and the exercise 712 includes the question 712A and the answer 712B. In this case, the first service is a test paper generation service. In this application, an example in which the test paper includes at least one question and does not include an answer is used for description. The second interface includes the first question, but does not include the answer to the first question. For example, the second interface is the user interface 730 shown in FIG. 7A-2. The user interface 730 includes the question 712A (the question information 733 in the user interface 730), but does not include the answer 712B. For specific scenario description, refer to the description in FIG. 7A-1 and FIG. 7A-2.

In some embodiments, the first interface further includes third information, and the third information is related to a second service. Description of the third information and the second service is similar to description of the first information and the first service. S203 may be specifically: The first device recognizes the first information to determine fourth information, recognizes the third information to determine fifth information, and determines, from the fourth information and the fifth information according to a first preset rule, that the intent information is the fourth information. The fourth information indicates to execute the first instruction, the fifth information indicates to execute a second instruction, and the second instruction is used to implement the second service. Description of the second instruction is similar to description of the first instruction.

Optionally, the first preset rule may include: A device type of the second device is a preset device type, which may be understood that the first device may determine, based on the device type of the connected second device, the intent information to be implemented. For example, in the foregoing scenario 2, the first interface is a chat interface, the first information and the third information are respectively the message 412 and the message 414 in the user interface 410 shown in FIG. 4A-1, the first information is location information, and the third information is video information. In this case, the first service corresponding to the first information is a navigation service, the fourth information indicates to perform navigation on a geographical location "Beijing Railway Station", the second service corresponding to the third information is a video playing service, and the fifth information indicates to play a video named "My Day". The first device is the electronic device 100 (a smartphone), and the second device is the electronic device 200. If the second device is an on-board computer, the first device may determine that the intent information is the fourth information. For an example scenario, refer to FIG. 4A-1 and FIG. 4A-2. If the second device is a smart television, the first device may determine that the intent information is the fifth information. For an example scenario, refer to FIG. 4B-1 and FIG. 4B-2.

Optionally, the first preset rule may include: A service supported by the second device includes the first service. For example, the first service is a navigation service. If the second device is a device on which a map application is installed and that can execute the navigation service based on the map application, the first device may determine that the intent information is the first information.

Optionally, the first preset rule may include: A priority of the first service is higher than a priority of the second service.

Optionally, the first information and the third information are instant messaging messages, and the first preset rule may include that receiving time of the first information is later than receiving time of the third information. For example, in the foregoing scenario 2, the first interface is a chat interface, and the first information and the third information are respectively the message 412 and the message 414 in the user interface 410 shown in FIG. 4A-1. Because the message 414 is received later, the first device may determine that the intent information is the fifth information corresponding to the message 414, and the fifth information indicates to play a video named "My Day". For an example scenario, refer to FIG. 4B-1 and FIG. 4B-2.

The method shown in FIG. 10 is applied to, for example, the communication system 10 shown in FIG. 1C, the first device is the electronic device 100, and the second device is the electronic device 200. For details, refer to the description in FIG. 1C.

FIG. 11 is a schematic flowchart of still another display method according to an embodiment of this application. A first device in the method may be the foregoing electronic device 100, and a second device in the method may be the foregoing electronic device 200. The method may include but is not limited to the following steps.

S301: The first device displays a first interface.

S302: The first device receives a first user operation.

S303: In response to a first user operation, the first device recognizes the first interface to determine intent information.

S301 to S303 are consistent with S201 to S203 in FIG. 10. For details, refer to the description of S201 to S203 in FIG. 10.

S304: The first device executes a first instruction based on the intent information, to generate second information.

S304 is similar to S205 in FIG. 10. A difference lies in that an execution device in S304 is the first device instead of the second device.

S305: The first device sends the second information to the second device.

S306: The second device displays a second interface based on the second information.

S306 is consistent with S206 in FIG. 10. For details, refer to the description of S206 in FIG. 10.

The example in FIG. 11 is similar to the example in FIG. 10. A difference lies in that in FIG. 11, a device that executes the first instruction and generates the second information is not the second device, but is the first device. For details, refer to the example in FIG. 10.

The method shown in FIG. 11 is applied to, for example, the communication system 10 shown in FIG. 1B, the first device is the electronic device 100, and the second device is the electronic device 200. For details, refer to the description in FIG. 1B.

This is not limited to the cases in FIG. 10 and FIG. 11. In some other embodiments, a device that recognizes the first interface to determine the intent information may not be the first device, but is the second device. For example, in response to the first user operation, the first device sends multimedia data (such as image data) related to the first interface to the second device. The second device performs intent recognition based on the received data. A specific process is similar to the foregoing process in which the first device recognizes the first interface to determine the intent information. Details are not described again.

When any one of the foregoing modules or units is implemented by using software, the software exists in a form of computer program instructions, and is stored in a memory. A processor may be configured to execute the program instructions to implement the foregoing method procedures. The processor may include but is not limited to at least one of the following: various computing devices that run software, such as a central processing unit (central processing unit, CPU), a microprocessor, a digital signal processor (DSP), a microcontroller unit (microcontroller unit, MCU), or an artificial intelligence processor. Each computing device may include one or more cores used to execute software instructions to perform operations or processing. The processor may be an independent semiconductor chip, or may be integrated with another circuit into a semiconductor chip. For example, the processor may constitute a SoC (system-on-a-chip) with another circuit (for example, a codec circuit, a hardware acceleration circuit, or various buses and interface circuits). Alternatively, the processor may be integrated into an ASIC as a built-in processor of the ASIC. The ASIC integrated with the processor may be separately packaged, or may be packaged with another circuit. In addition to a core for executing software instructions to perform an operation or processing, the processor may further include a necessary hardware accelerator, for example, a field-programmable gate array (field-programmable gate array, FPGA), a PLD (programmable logic device), or a logic circuit for implementing a dedicated logic operation.

When the foregoing modules or units are implemented by hardware, the hardware may be any one of or any combination of a CPU, a microprocessor, a DSP, an MCU, an artificial intelligence processor, an ASIC, a SoC, an FPGA, a PLD, a dedicated digital circuit, a hardware accelerator, or a non-integrated discrete device. The hardware may run necessary software or without software to perform the foregoing method procedure.

A person of ordinary skill in the art may understand that all or some of the processes of the methods in the foregoing embodiments may be implemented by a computer program instructing related hardware. The computer program may be stored in a computer-readable storage medium. When the computer program is executed, the procedures in the foregoing method embodiments are performed. The foregoing storage medium includes: any medium that can store computer program code, for example, a read-only memory (read-only memory, ROM), a random access memory (random access memory, RAM), a magnetic disk, or an optical disc.

## Claims

1. A display method, applied to a first device, wherein the first device is connected to a second device, and the method comprises:
displaying a first interface, wherein the first interface comprises first information, and the first information is related to a first service;
receiving a first user operation;
in response to the first user operation, recognizing the first interface to determine intent information, wherein the intent information indicates to execute a first instruction, and the first instruction is used to implement the first service; and
sending the intent information to the second device, wherein the intent information is used by the second device to execute the first instruction and generate second information, and the second information is used by the second device to display a second interface.

2. The method according to claim 1, wherein the first interface further comprises third information, and the third information is related to a second service; and
the recognizing the first interface to determine intent information comprises:
recognizing the first information to determine fourth information, and recognizing the third information to determine fifth information, wherein the fourth information indicates to execute the first instruction, the fifth information indicates to execute a second instruction, and the second instruction is used to implement the second service; and
determining, from the fourth information and the fifth information according to a first preset rule, that the intent information is the fourth information, wherein the first preset rule comprises at least one of the following: a device type of the second device is a preset device type, a service supported by the second device comprises the first service, and a priority of the first service is higher than a priority of the second service.

3. The method according to claim 2, wherein the first information is location information, the first service is a navigation service, the second service is different from the first service, the first preset rule comprises that the device type of the second device is the preset device type, and the preset device type is vehicle-mounted device.

4. The method according to any one of claims 1 to 3, wherein the first information is information indicating a first location, the first service is the navigation service, and the second information is display information generated by performing a navigation operation on the first location.

5. The method according to claim 1 or 2, wherein the first information is information indicating a first video, the first service is a video playing service, and the second information is display information generated by playing the first video.

6. The method according to claim 1 or 2, wherein the first information is information indicating a first recipe, the first service is a cooking service, and the second information is display information generated for implementing the cooking service corresponding to the first recipe.

7. The method according to claim 1 or 2, wherein the first information is information indicating a first question and an answer to the first question, the first service is a test paper generation service, and the second interface comprises the first question, but does not comprise the answer to the first question.

8. A display method, applied to a first device, wherein the first device is connected to a second device, and the method comprises:
displaying a first interface, wherein the first interface comprises first information, and the first information is related to a first service;
receiving a first user operation;
in response to the first user operation, recognizing the first interface to determine intent information;
executing a first instruction based on the intent information, to generate second information, wherein the first instruction is used to implement the first service; and
sending the second information to the second device, wherein the second information is used by the second device to display a second interface.

9. The method according to claim 8, wherein the first interface further comprises third information, and the third information is related to a second service; and
the recognizing the first interface to determine intent information comprises:
recognizing the first information to determine fourth information, and recognizing the third information to determine fifth information, wherein the fourth information indicates to execute the first instruction, the fifth information indicates to execute a second instruction, and the second instruction is used to implement the second service; and
determining, from the fourth information and the fifth information according to a first preset rule, that the intent information is the fourth information, wherein the first preset rule comprises that a device type of the second device is a preset device type, and/or a priority of the first service is higher than a priority of the second service.

10. A display method, applied to a second device, wherein the second device is connected to a first device, and the method comprises:
receiving intent information sent by the first device, wherein the intent information is determined by recognizing a displayed first interface when the first device receives a first user operation, the first interface comprises first information, and the first information is related to a first service;
executing a first instruction based on the intent information, to generate second information, wherein the first instruction is used to implement the first service; and
displaying a second interface based on the second information.

11. A display method, applied to a second device, wherein the second device is connected to a first device, and the method comprises:
receiving first information sent by the first device, wherein the first information is information generated by executing a first instruction, the first instruction is used to implement a first service, the first instruction is an instruction executed as indicated by intent information, the intent information is determined by recognizing a displayed first interface when the first device receives a first user operation, the first interface comprises second information, and the second information is related to the first service; and
displaying a second interface based on the first information.

12. An electronic device, comprising a transceiver, a processor, and a memory, wherein the memory is configured to store a computer program, and the processor invokes the computer program to perform the method according to any one of claims 1 to 11.

13. A computer storage medium, wherein the computer storage medium stores a computer program, and when the computer program is executed by a processor, the method according to any one of claims 1 to 11 is implemented.
